# EUROPÄISCHE PATENTSCHRIFT

(11) **EP 2 271 859 B1**
(45) Veröffentlichungstag und Bekanntmachung des Hinweises auf die Patenterteilung: **28.09.2011**
(21) Anmeldenummer: 09738088.5
(22) Anmeldetag: 27.04.2009
(51) Int. Cl.: F16H 1/32, F16H 23/04, F16H 23/10

(54) **TAUMELRADGETRIEBE MIT STIRNVERZAHNUNG**
SWASH PLATE MECHANISM COMPRISING A SPUR TOOTHING
MÉCANISME À ROUE OSCILLANTE À DENTURE DROITE

(30) Priorität: 30.04.2008 DE 102008001491
(43) Veröffentlichungstag der Anmeldung: 12.01.2011
(73) Patentinhaber: ZF Friedrichshafen AG, 88038 Friedrichshafen (DE)
(72) Erfinder: BOERNER, Joerg, 88048 Friedrichshafen (DE)
(86) Internationale Anmeldenummer: PCT/EP2009/055016
(87) Internationale Veröffentlichungsnummer: WO 2009/133044

(56) Entgegenhaltungen:
- EP-A- 0 332 450
- EP-A- 1 450 070
- WO-A-01/31760
- DE-A1- 2 731 486

## Beschreibung

Die Erfindung betrifft ein Taumelradgetriebe nach dem Oberbegriff von Anspruch 1.

Das Prinzip des Taumelradgetriebes ist bekannt und ermöglicht mit nur wenigen Übersetzungsstufen, und damit einer geringen Anzahl von Bauteilen, sehr hohe Übersetzungsverhältnisse. Das Taumelradprinzip findet insbesondere bei der Reduzierung von hohen Antriebsdrehzahlen auf sehr geringe Abtriebsdrehzahlen seine Anwendung. Hierbei weist ein schnell laufendes, um eine Hauptachse rotierendes Antriebsglied einen zur Hauptachse der Antriebswelle um einen Taumelwinkel gekröpften Abschnitt auf, welcher zentrisch zu einer Taumelachse ist. Innerhalb des gekröpften Abschnitts ist ein Übertragungsglied, welches auch als Taumelrad bezeichnet wird, um eine die Hauptachse schneidende Taumelachse drehbar gelagert. Da die Taumelachse einen Kegelmantel erzeugend mit der Winkelgeschwindigkeit des Antriebsglieds um die Hauptachse rotiert, stellt sich für einen ortsfesten Betrachter eine Taumelbewegung des Übertragungsglieds ein. Auf dem Übertragungsglied sind zwei umlaufende Verzahnungen angebracht, von welchen eine in eine Verzahnung eines Abstützglieds eingreift. Hierdurch führt das Übertragungsglied eine Taumel- oder Präzessionsbewegung um die Hauptachse mit der Drehfrequenz des Antriebsglieds aus. Aufgrund der Taumelbewegung des Übertragungsglieds wandert der Eingriffsbereich der Verzahnungen umlaufend in der Verzahnung des Abstützglieds, wobei bei gleicher Zähnezahl von der Verzahnung auf dem Übertragungsglied und der Verzahnung auf dem Abstützglied das Übertragungsglied seinen Drehwinkel relativ zum Abstützglied nicht verändert und immer wieder die selben Zähne beider Verzahnungen in Kontakt sind. Bei einer Zähnezahldifferenz von einem Zahn wird die höchste Übersetzungsstufe erreicht, da sich das Übertragungsglied pro Umdrehung des Antriebsglieds nur um einen Zahn relativ zum Abstützglied verdreht. Bei einer Zähnezahl von n Zähnen auf dem Übertragungsglied oder dem Abstützglied und einer Zähnezahldifferenz von einem Zahn kommt auf n Umdrehungen des Antriebsgliedes eine Umdrehung des Übertragungsglieds. Hieraus wird deutlich, dass das Übersetzungsverhältnis der Verzahnungspaarung von Zähnezahldifferenz und Zähnezahl abhängt. Um nun die Taumelbewegung in eine Drehbewegung umzuwandeln und die Drehzahl des taumelnden Übertragungsglieds auf ein Abtriebsglied zu übertragen ist eine zweite Übersetzungsstufe erforderlich, welche von der zweiten Verzahnung auf dem Übertragungsglied und einer Verzahnung auf dem Abtriebsglied gebildet wird. Es ist auch möglich das Übersetzungsverhältnis ausschließlich durch eine Übersetzungsstufe zu realisieren und das andere mit i = 1 auszulegen. Um ein Übersetzungsverhältnis von i = 1 zwischen dem Übertragungsglied und dem Abstützglied einzustellen, können neben einer Verzahnung auch andere Koppelmittel die drehfeste und axial verschiebbare Abstützung des Übertragungsglieds bewirken. Das Gesamtübersetzungsverhältnis eines beschriebenen Taumelradgetriebes ergibt sich aus den einzelnen Zähnezahlverhältnissen aller Verzahnungspaarungen, wobei hohe Zähnezahlen und geringe Zähnezahldifferenzen in den jeweiligen Verzahnungspaarungen die Drehzahlreduzierung von der Antriebs- zur Abtriebsseite begünstigen.

Ein solches Taumelradgetriebe zeigt die DE 1707499 U. Hierbei ist das Antriebsglied als Antriebswelle ausgeführt, auf welcher eine Buchse mit einer in einem Winkel zur Richtung der Hauptachse ausgerichteten zylindrischen Außenkontur befestigt ist, wodurch ein gekröpfter Wellenabschnitt entsteht, dessen Zentrum von einer zur Hauptachse der Antriebswelle geneigten Taumelachse gebildet wird, um welche ein Übertragungsglied rotiert. Auf den beiden Axialseiten des Übertragungsglieds ist jeweils eine Verzahnung, ähnlich der eines Kegelrads angeordnet, nachfolgend als erste und dritte Verzahnung bezeichnet. Die dritte Verzahnung des Übertragungsglieds ist im Eingriff mit einer vierten Verzahnung, welche an dem Abstützglied, in diesem Falle als feststehender Gehäusedeckel ausgebildet, angeordnet ist. Hierdurch führt das auf der zylindrischen Außenkontur des gekröpften Teils des Antriebsglieds gelagerte Übertragungsglied eine Taumelbewegung aus. Die erste Taumelradverzahnung ist auf der Gegenseite im Eingriff mit einer gleichfalls kegelradartigen zweiten Verzahnung, die sich an einem Abtriebsglied befindet. Das Abtriebsglied wird aus einem die zweite Verzahnung aufweisenden Abtriebsrad und der mit dem Abtriebsrad verbundenen Abtriebswelle gebildet und ist wie das Antriebsglied um die Hauptachse drehbar. Die Zähnezahlen der ersten und zweiten Verzahnung und/oder die Zähnezahlen der dritten und vierten Verzahnung sind unterschiedlich, ebenso können die Zähnezahlen der ersten und dritten Verzahnung auf dem Übertragungsglied gleich oder unterschiedlich sein.

Die EP 0078111 B1 zeigt ein Taumelradgetriebe mit ähnlichem Aufbau wie in der DE 1707499 U. Der Gegenstand der Erfindung ist hierbei die besondere Gestaltung der Kegelradverzahnung.

Aus der DE 19953485 C1 ist ein Taumelradgetriebe bekannt, bei welchem die Koppelmittel zwischen Übertragungsglied und Abstützglied nicht als Verzahnungen ausgebildet sind, sondern als Klauen, die am Umfang des Übertragungsglieds angeordnet sind und von diesem radial nach außen weisen, wobei die Klauen in gehäusefeste Gleitführungen eingreifen, welche als Koppelmittel des Abstützglieds wirksam sind. Da die Anzahl von Klauen und Gleitführungen, in welchen sich die Klauen axial bewegen können, gleich ist, ist das Übertragungsglied zwar drehfest mit dem Abstützglied verbunden, kann jedoch eine Taumelbewegung ausführen. Eine als Kegelradverzahnung ausgeführte erste Verzahnung am Übertragungsglied greift in die ebenfalls als Kegelradverzahnung ausgeführte zweite Verzahnung am Abtriebsglied ein, wobei die erste und zweite Verzahnung eine Zähnezahldifferenz aufweisen. Aufgrund nur einer Drehzahlwandlung ist die erreichbare Gesamtübersetzung einer solchen Anordnung erheblich geringer wie bei einer zusätzlichen Drehzahlwandlung zwischen der am Übertragungsglied angeordneten dritten Verzahnung und der am Abstützglied angeordneten vierten Verzahnung, wenn diese eine Zähnezahldifferenz aufweisen.

Eine Veröffentlichung der Firma STAM mit dem Titel "Report Spacegear - State of Development" vom Mai 2003 zeigt ein Taumelradgetriebe mit einem Antriebsglied, einem Übertragungsglied, einem Abstützglied und einem Abtriebsglied, wobei ebenfalls alle Verzahnungen axial ausgerichtet sind. Die erste und dritte Verzahnung des Übertragungsglieds sind hierbei jedoch nicht axial gegenüberliegend an den axialen Außenflächen des Übertragungsglieds angeordnet, sondern liegen konzentrisch ineinander und weisen axial zur gleichen Seite. Die in die erste und dritte eingreifende zweite und vierte Verzahnung sind dem entsprechend ebenfalls konzentrisch angeordnet und der ersten und dritten Verzahnung entgegengerichtet.

Die EP gattungsgemäße 0332450 A2 zeigt ein Taumelradgetriebe mit einem gleichen prinzipiellen Aufbau wie in der DE 1707499 U. Auch hier erheben sich die Zähne in axialer Richtung, ähnlich einer Kegelradverzahnung.

Die axial ausgerichtete Kegelradverzahnung ist aufwändig in der Fertigung und erzeugt im Betrieb Axialkräfte, welche durch eine geeignete Lagerung abgestützt werden müssen.

Die der Erfindung zugrunde liegende Aufgabe ist es, ein Taumelradgetriebe zu schaffen, dessen Verzahnung einfach herstellbar ist.

Diese Aufgabe wird durch die Merkmale des Patenanspruchs 1 gelöst.

Ein Taumelradgetriebe besteht aus einem Antriebsglied, einem Übertragungsglied, einem Abstützglied und einem Abtriebsglied, welche zusammenfassend nachfolgend als Getriebeglieder bezeichnet werden. Das Antriebsglied ist hierbei um eine Hauptachse drehbar angeordnet. Eine Taumelachse schneidet die Hauptachse unter einem Taumelwinkel, wobei die Taumelachse bei einer Drehung des Antriebsglieds mit diesem um die Hauptachse umläuft. Um die Taumelachse ist das Übertragungsglied drehbar angeordnet. Zwischen dem Übertragungsglied und dem Abtriebsglied ist ein erstes Koppelmittel und zwischen dem Übertragungsglied und dem Abstützglied ein zweites Koppelmittel angeordnet, wobei mindestens eines der beiden Koppelmittel eine Verzahnungspaarung ist. Unter dem Begriff "Koppelmittel" kann eine Verzahnung oder ein anderes Mittel zur formschlüssigen Verbindung verstanden werden. Zwischen dem Übertragungsglied und dem Abstützglied und/oder zwischen dem Übertragungsglied und dem Abtriebsglied findet eine Drehzahlwandlung statt.

Erfindungsgemäß sind die Verzahnungen, welche die Verzahnungspaarung bilden, als Stirnverzahnungen ausgebildet. Stirnverzahnungen sind einfacher in Herstellung als die aus dem Stand der Technik bekannten Kegelradverzahnungen oder kegelradartigen Verzahnungen. So ist beispielsweise die Verwendung von Werkzeugen zur Fertigung von Evolventen-Verzahnungen möglich. Zudem sind die bei der radial ausgerichteten Stirnverzahnung auftretenden Axialkräfte deutlich geringer als bei der axial ausgerichteten Kegelradverzahnung.

Vorteilhafte Ausgestaltungen der Erfindung ergeben sich aus den Unteransprüchen.

In einer vorteilhaften Ausgestaltung der Erfindung ist das erste Koppelmittel als mindestens eine erste Verzahnungspaarung, bestehend aus einer ersten und einer zweiten Verzahnung und das zweite Koppelmittel als mindestens eine zweite Verzahnungspaarung, bestehend aus einer dritten und einer vierten Verzahnung, ausgebildet.

In einer besonders vorteilhaften Weiterbildung des erfindungsgemäßen Gegenstandes ist zwischen der ersten und der zweiten Verzahnung und der dritten und vierten Verzahnung eine Zähnezahldifferenz vorhanden. Durch eine zweifache Drehzahlwandlung erhöht sich das Gesamtübersetzungsverhältnis des Taumelradgetriebes.

Eine weitere Ausgestaltungsform sieht vor, dass die am Übertragungsglied angeordnete erste und dritte Verzahnung als Außenverzahnungen ausgebildet sind und die zweite Verzahnung am Abtriebsglied sowie die vierte Verzahnung am Abstützglied jeweils als Innenverzahnung ausgeführt sind.

In einer alternativen Ausführung sind die am Übertragungsglied angeordnete erste und dritte Verzahnung als Innenverzahnungen ausgebildet und die am Abtriebsglied angeordnete zweite Verzahnung sowie die vierte Verzahnung am Abstützglied jeweils als Außenverzahnung ausgeführt.

Eine weitere alternative Ausführungsform sieht vor, dass die am Übertragungsglied angeordnete erste Verzahnung und die am Abstützglied angeordnete vierte Verzahnung als Innenverzahnungen, und die am Abtriebsglied angeordnete zweite Verzahnung und die am Übertragungsglied angeordnete dritte Verzahnung als Außenverzahnungen ausgeführt sind.

In diesem Zusammenhang sind in einer weiteren Ausgestaltung der Erfindung die am Übertragungsglied angeordnete erste Verzahnung und die am Abstützglied angeordnete vierte Verzahnung als Außenverzahnungen und die am Abtriebsglied angeordnete zweite Verzahnung und die am Übertragungsglied angeordnete dritte Verzahnung als Innenverzahnungen ausgeführt.

Es ist außerdem möglich, dass die am Übertragungsglied angeordnete erste und dritte Verzahnung als Innenverzahnungen und die am Abstützglied angeordnete zweite Verzahnung und die am Abtriebsglied angeordnete vierte Verzahnung als Außenverzahnungen ausgebildet sind. Hierbei sind die erste und dritte Verzahnung konzentrisch mit unterschiedlichen Durchmessern am Übertragungsglied angeordnet.

Außerdem kann gemäß der Erfindung vorgesehen sein, dass das erste Koppelmittel zwischen dem Übertragungsglied und dem Abtriebsglied als Verzahnung und das zweite Koppelmittel zwischen Übertragungsglied und Abstützglied als Kardanring ausgebildet ist, wobei der Kardanring drehfest mit dem Abstützglied verbunden ist.

In einer besonders vorteilhaften Ausgestaltung der Erfindung sind die Koppelmittel zwischen den Getriebegliedern jeweils zwei Verzahnungspaarungen, wobei deren Zahneingriffe um 180°versetzt sind, so dass die Radial- bzw. Umfangskraftkomponenten aus den Verzahnungskräften kompensiert werden können. Durch die Kompensation der Radialkraft- bzw. der Umfangskraftkomponenten verringert sich vorteilhaft die Lagerbelastung, bzw. ist eine höhere Drehmomentübertragung durch das Taumelradgetriebe möglich.

Die Bedingung für ein einwandfreies Abwälzen bzw. einen klemmfreien Lauf der beiden Zahneingriffe ist ein identisches Zähnezahl- bzw. Übersetzungsverhältnis in beiden Zahnradpaarungen. Dies erreicht man beispielsweise, indem jeweils beide Verzahnungen auf einem Getriebeglied identisch sind, bzw. symmetrische bezüglich einer bestimmten Symmetrieebene ausgebildet sind. Die Symmetrieebene für das jeweilige Getriebeglied verläuft durch den Schnittpunkt von Hauptachse und Taumelachse und steht auf der Drehachse des jeweiligen Getriebeglieds senkrecht. Die Symmetrie besteht auch hinsichtlich Zähneform, Zähnezahl und Verzahnungsgeometrie, da die zusätzlichen Verzahnungen durch Spiegelung der zuerst einfach vorhandenen Verzahnung an einer ersten Ebene gebildet werden. Die erste Ebene, welche zur Erzeugung zusätzlicher Verzahnungen auf dem Übertragungsglied dient, wird senkrecht von der Taumelachse durchstochen und geht durch den Schnittpunkt von Hauptachse und Taumelachse. Die zusätzlichen Verzahnungen auf dem Abstützglied und dem Abtriebsglied gehen aus der Spiegelung der jeweils ursprünglich einfach vorhandenen Verzahnung an einer zweiten Ebene hervor, wobei die Hauptachse senkrecht auf der zweiten Ebene steht und der Schnittpunkt von Taumelachse und Hauptachse auch in der zweiten Ebene liegt. Die Abstände der symmetrischen Verzahnungen von der jeweiligen Ebene sind gemäß der Symmetrie gleich.

Aufgrund der Symmetrie von axial nebeneinander auf einem Getriebeglied angeordneten Verzahnungen sind in einer Ausgestaltung der Erfindung die beiden Verzahnungen durchgehend bearbeitet, so dass diese als eine durchgehende Verzahnung ausgebildet sind. Gleiche Übersetzungsverhältnisse bei beiden Verzahnungspaaren zwischen zwei Getriebegliedern, welche dadurch erreicht werden, dass eine erste Verzahnung auf einem Getriebeglied ein ganzzahliges Vielfaches der Zähnezahl einer zweiten auf dem selben Getriebeglied angeordneten Verzahnung hat, stellen nur eine theoretische Lösung dar, da diese Auslegung nur Nachteile hinsichtlich der Fertigung aufweist und keine Vorteile bietet.

Grundsätzlich ist es bei dem erfindungsgemäßen Gegenstand möglich, dass das Abtriebsglied und das Abstützglied ihre Funktionen tauschen können. Allerdings zu beachten, dass sich hierbei die Gesamtübersetzung des Taumelradgetriebes bzw. die Drehrichtung des Abtriebsglieds ändert.

In einer vorteilhaften Ausgestaltung der Erfindung ist das Abstützglied feststehend und somit das Taumelradgetriebe als Standgetriebe ausgebildet.

In einer alternativen Ausführungsform ist es möglich, dass das Abstützglied antreibbar und somit das Taumelradgetriebe als Überlagerungsgetriebe ausgebildet ist.

In einer Ausbildung der Erfindung weist das Antriebsglied eine zentrisch zur Taumelachse angeordnete Außenkontur auf, um welche das Übertragungsglied mittels einer Lagerung drehbar angeordnet ist.

Alle Lagerungen zwischen den Getriebegliedern bzw. einem Gehäuse können als Wälzlager oder als Gleitlager ausgebildet sein.

In einer alternativen Ausführungsform hierzu weist das Antriebsglied eine zentrisch zur Taumelachse angeordnete Innenkontur auf, innerhalb welcher das Übertragungsglied mittels einer Lagerung drehbar angeordnet ist.

Es wird als besonders vorteilhaft beurteilt, dass mindestens eine Verzahnung einer Verzahnungspaarung als eine evolventische Stirnverzahnung mit einer über der Zahnbreite veränderlichen Profilverschiebung ausgebildet ist. Diese Verzahnungsform ist für den Ausgleich von nichtparallelen Achsen in Stirnradpaarungen geeignet, da derart gestaltete Zahnräder aufgrund der Änderung des Zahnfuß- und Zahnkopfdurchmessers über der Breite eine konische Außenkontur haben. Eine solche Zahnform wird auch als Beveloid-Verzahnung bezeichnet und ist vorteilhafterweise mit den Werkzeugen für Evolventen-Verzahnungen herstellbar.

Eine weitere Ausgestaltung der Erfindung sieht vor, dass die erste und dritte Verzahnung des Übertragungsglieds bei gleicher Zähnezahl und gleichem Grundkreis aus Gründen einfacher Fertigung eine durchgehende Verzahnung bilden.

Zusätzlich ist es vorteilhaft, dass das Taumelradgetriebe entlang seiner Hauptachse einen zentralen Durchlass aufweist. Hierdurch ist es beispielsweise möglich, Wellen zum An- oder Abtrieb anderer Maschinenelemente oder Leitungen zum Transport von Arbeitsmedien durch das Taumelradgetriebe zu führen.

Eine besondere Ausführungsform des erfindungsgemäßen Gegenstandes sieht ein Taumelradgetriebe in einer Steuereinrichtung in einem Schiffsantrieb zur Betätigung einer zum Steuern schwenkbaren Schubeinheit vor, wobei in der Steuereinrichtung ein Elektromotor mittels eines Stirnrads ein um eine Hauptachse drehbares Antriebsglied des Taumelradgetriebes antreibt. An dem Antriebsglied ist ein Übertragungsglied um eine Taumelachse drehbar angeordnet, welches ebenso wie das Abtriebsglied und das Abstützglied einen zentralen Durchlass aufweist. In dem zentralen Durchlass ist eine Antriebswelle zum Antrieb der Propellerwelle um die Hauptachse drehbar angeordnet und das Abtriebsglied zwecks Einstellung der Fahrtrichtung mit der schwenkbaren Schubeinheit verbunden.

Ausführungsbeispiele der Erfindung sind in den Zeichnungen dargestellt und werden im Folgenden näher beschrieben.

Es zeigen:
- Fig. 1a: eine schematische Darstellung eines Taumelradgetriebes mit einer axial ausgerichteten Verzahnung nach dem Stand der Technik;
- Fig. 1b: eine schematische Darstellung eines erfindungsgemäßen Taumelradgetriebes;
- Fig. 2: einen Längsschnitt durch ein Taumelradgetriebe, bei wel- chem die am Übertragungsglied angeordnete erste und dritte Verzahnung als Außenverzahnungen ausgebildet sind;
- Fig. 3: einen Längsschnitt durch ein Taumelradgetriebe, bei wel- chem die am Übertragungsglied angeordnete erste und dritte Verzahnung als Innenverzahnungen ausgebildet sind;
- Fig. 4: einen Längsschnitt durch ein Taumelradgetriebe, bei wel- chem die am Übertragungsglied angeordneten Verzahnun- gen als mindestens eine Außenverzahnung und als min- destens eine Innenverzahnung ausgeführt sind;
- Fig. 5: einen Längsschnitt durch ein Taumelradgetriebe, bei wel- chem die am Übertragungsglied angeordneten Verzahnun- gen jeweils als mindestens eine Innenverzahnung ausge- führt sind;
- Fig. 6: einen Längsschnitt durch ein Taumelradgetriebe, bei wel- chem das Koppelmittel zwischen Übertragungsglied und Abstützglied ein Kardanring ist;
- Fig. 7: eine schematische Darstellung eines Längsschnitts von einem Zahneingriff eines außenverzahnten Stirnrades mit über der Zahnbreite veränderlicher Profilverschiebung in ein Hohlrad mit konstanter Profilverschiebung;
- Fig. 8: eine schematische Darstellung eines Längsschnitts durch ein außenverzahntes Stirnrad mit über der Zahnbreite ver- änderlicher Profilverschiebung und einer Darstellung der Zahnform über der Breite und
- Fig. 9: eine schematische Darstellung eines Taumelradesgetrie- bes zum Steuern eines Schiffsantriebs.

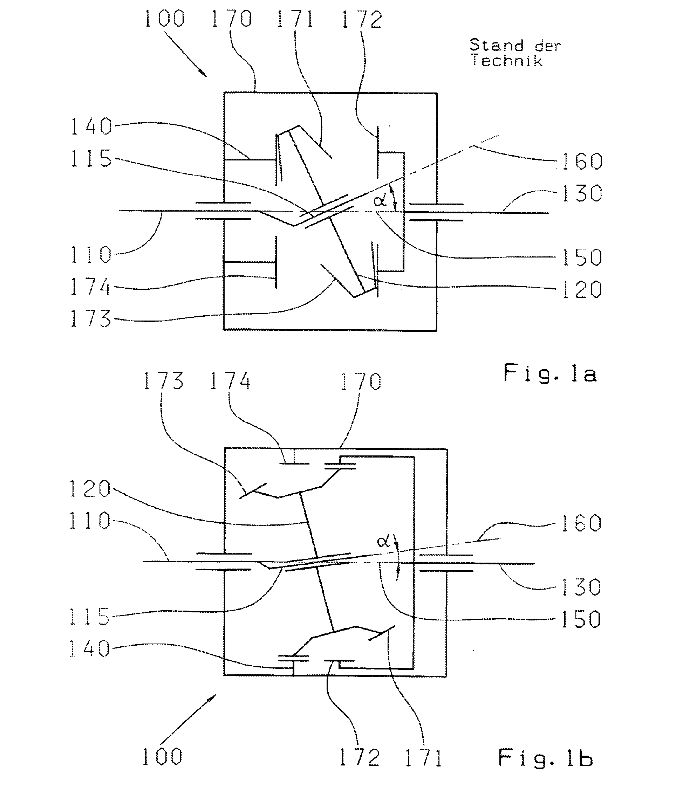

In Fig. 1 a ist ein Taumelradgetriebe 100, wie es der Stand der Technik offenbart, schematisch dargestellt. Ein Antriebsglied 110 welches in einem Gehäuse 170 um eine Hauptachse 150 drehbar gelagert ist, weist einen um einen Taumelwinkel α gekröpften Abschnitt 115 auf, durch welchen eine Taumelachse 160 verläuft. Auf dem gekröpften Abschnitt 115 ist ein Übertragungsglied 120 um die Taumelachse 160 drehbar gelagert, wobei die Taumelachse 160 die Hauptachse 150 unter dem Taumelwinkel α in einem Schnittpunkt S schneidet und um die Hauptachse 150 mit der Drehfrequenz der Antriebsglieds 110 rotiert. Eine auf dem Übertragungsglied 120 angeordnete erste Verzahnung 171 steht mit einer zweiten Verzahnung 172, welche an einem Abtriebsglied 130 angeordnet ist, im Eingriff. Das Abtriebsglied 130 ist wie das Antriebsglied 110 um die Hauptachse 150 drehbar gelagert. Eine dritte Verzahnung 173, welche ebenfalls am Übertragungsglied 120 angeordnet ist, kämmt mit einer an dem Abstützglied 140 angeordneten vierten Verzahnung 174. Das Abstützglied 140 ist in diesem Beispiel fest mit dem Gehäuse 170 verbunden. Alle Verzahnungen 171 bis 174 sind als in axiale Richtung weisende Kegelradverzahnungen oder sonstige axial ausgerichtete Verzahnungen ausgebildet. Das Antriebsglied 110 wird mit einer Antriebsdrehzahl angetrieben, wodurch sich die Taumelachse 160 mit dem Antriebsglied 110 dreht und das Übertragungsglied 120 durch seine Verzahnung mit dem Abstützglied 140 eine Taumelbewegung ausführt. Bei einer Zähnezahldifferenz zwischen der dritten Verzahnung 173 und der vierten Verzahnung 174 verdreht sich das Übertragungsglied 120 relativ zum feststehenden Abstützglied 140, wodurch die Drehzahl des Antriebsglieds 110 mit einem Übersetzungsverhältnis, welches sich aus der Zähnezahldifferenz zwischen der dritten Verzahnung 173 und der vierten Verzahnung 174 errechnet, reduziert wird. Um die taumelnde Drehbewegung des Übertragungsglied 120 als reine Drehbewegung aus dem Taumelradgetriebe führen zu können, wälzt die erste Verzahnung 171 des Übertragungsglieds 120 in der am Abtriebsglied 130 angeordneten zweiten Verzahnung 172 und treibt damit das Abtriebsglied 130 an. Ist zwischen der ersten Verzahnung 171 und der zweiten Verzahnung 172 eine Zähnezahldifferenz vorhanden, ist eine weitere Reduktion der Antriebsdrehzahl möglich, bzw. erhöht sich die Gesamtübersetzung des Taumelradgetriebes 100. Wäre keine Zähnezahldifferenz auf in den beiden Verzahnungsstufen vorhanden, würde bei einem drehenden Antriebsglied 110 das Übertragungsglied 120 nur eine Taumelbewegung ausführen und sich relativ weder zum Abstützglied 140 noch zum Abtriebsglied 130 verdrehen, so dass das Abtriebsglied 130 stehen bleibt.

Fig. 1b zeigt in einer schematischen Darstellung die beispielhafte Ausführung eines erfindungsgemäßen Taumelradgetriebes 100. Es finden sich alle in der Fig. 1 a beschriebenen Elemente wieder und die geschilderte Wirkungsweise ist prinzipiell gleich. Der Unterschied liegt in der Ausführung der ersten bis vierten Verzahnung 171, 172, 173, 174 und den daraus resultierenden Anordnungen anderer Elemente. Im Gegensatz zu den axial ausgerichteten Verzahnungen aus Stand der Technik sind die erfindungsgemäßen Verzahnungen als Stirnverzahnungen ausgeführt und damit radial ausgerichtet. Die erste 171 und dritte Verzahnung 173 am Übertragungsglied 120 sind als Außenverzahnungen ausgebildet, wodurch die zweite 172 und vierte Verzahnung 174 zwangsläufig als Innenverzahnungen gestaltet sind. Hierdurch ist das Abstützglied 140 radial zur Hauptachse 150 an dem Gehäuse 170 angeordnet, im Gegensatz zum Stand der Technik, wo das Abstützglied stirnseitig am Gehäuse 170 positioniert war. Aufgrund der radial ausgerichteten Verzahnungen treten im Vergleich zum Stand der Technik nur noch geringe Axialkräfte auf und die radiale Verzahnung ist leichter herstellbar.

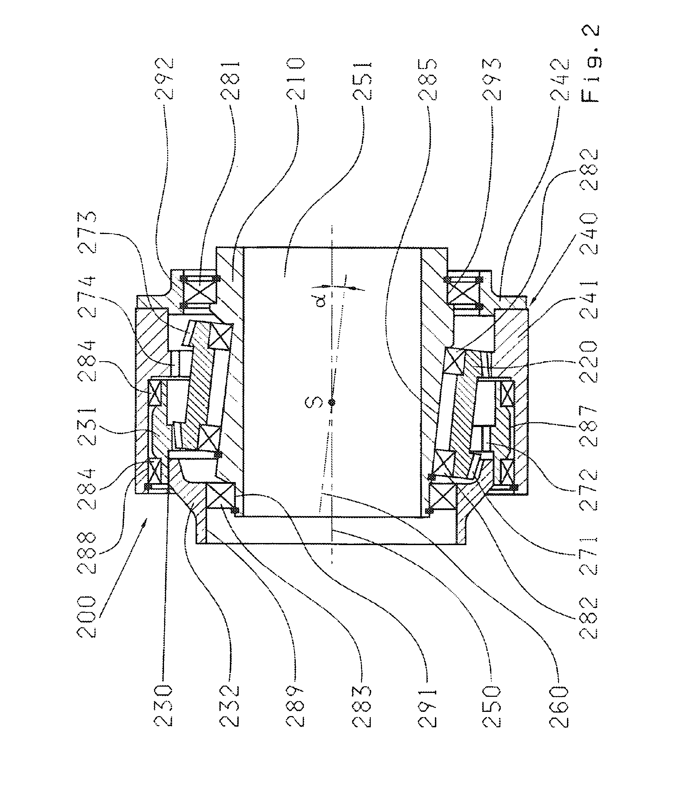

Fig. 2 zeigt einen Längsschnitt durch ein Taumelradgetriebe 200 mit Stirnverzahnungen, bei welchem die am Übertragungsglied 220 angeordnete erste und dritte Verzahnung 271 und 273 als Außenverzahnungen ausgebildet sind. Dem entsprechend sind die an einem Abtriebsglied 230 angeordnete zweite 272 und vierte Verzahnung 274 als Innenverzahnungen gestaltet. Das Antriebsglied 210 ist mit einem zentralen Durchlass 251 hohlwellenartig ausgebildet ist. Eine um einen Taumelwinkel α zur Hauptachse 250 geneigte taumelnde Außenkontur 285 des Antriebsglieds 210, durch deren Zentrum die Taumelachse 260 verläuft, trägt die zweiten Lager 282, auf welchen sich das Übertragungsglied 220 um die Taumelachse 260 drehen kann. Die Hauptachse 250 und die Taumelachse 260 schneiden sich unter dem Taumelwinkel α in einem Schnittpunkt S. Die am Übertragungsglied 220 angeordnete erste Verzahnung 271 steht mit der am Abtriebsglied 230 angeordneten zweiten Verzahnung 272 im Eingriff, wobei zwischen beiden Verzahnungen eine Zähnezahldifferenz besteht. Die am Übertragungsglied 220 angeordnete dritte Verzahnung 273 greift in die am Abstützglied 240 angeordnete vierte Verzahnung 274 ein, wobei auch zwischen der dritten und vierten Verzahnung eine Zähnezahldifferenz besteht und damit eine Drehzahlwandlung stattfindet. Bei Stirnverzahnungen mit nicht parallelen Achsen muss mindestens eine der beiden Verzahnungen eine Zahnform mit über der Zahnbreite veränderlicher Profilverschiebung aufweisen, um die Abwälzbewegung der unter einem Taumelwinkel α zueinander geneigten Stirnverzahnungen zu ermöglichen. Im beschriebenen Falle weisen die am Übertragungsglied 220 angeordnete erste 271 und dritte Verzahnung 273 eine Zahnform mit über der Zahnbreite veränderlicher Profilverschiebung auf.

Das ebenfalls um die Hauptachse 250 drehbare Abtriebsglied 230 besteht aus einem Hohlrad 231, in welchem die Verzahnung 272 angeordnet ist, und einem mit dem Hohlrad 231 fest verbundenen Lagerflansch 232, über welchen das Moment weitergeleitet wird. Zur drehbaren Lagerung des Abtriebsglieds 230 in dem Abstützglied 240 sind zwischen einer ersten Außenkontur 287 des Hohlrads 231 und einer ersten Innenkontur 288 des zum Abstützglied 240 gehörenden Hohlrads 241 die beiden vierten Lager 284 angeordnet. Zwischen einer zweiten Innenkontur 289 des Lagerflanschs 232 und einer zweiten Außenkontur 291 des Antriebsglieds 210 ist das dritte Lager 283 angeordnet. Das Abstützglied 240 besteht aus einem Gehäuse 241 und einem Lagerdeckel 242, welche fest miteinander verbunden sind. Zwischen einer dritten Innenkontur 292 des Lagerdeckels 242 und einer dritten Außenkontur 293 des Antriebsglieds 210 ist ein erstes Lager 281 angeordnet. Somit ist das Antriebsglied 210 in den ersten 281 und dritten Lagern 283 drehbar angeordnet. Das Abstützglied 240 kann festgesetzt sein, so dass das Taumelradgetriebe 200 als Standgetriebe wirksam ist und sich die Abtriebsdrehzahl aus der Drehzahl des Antriebsglieds 210 und dem Zähnezahlverhältnis zwischen erster 271 und zweiter Verzahnung 272 und zwischen dritter 273 und vierter Verzahnung 274 errechnet. Es ist allerdings in einer alternativen Ausgestaltung möglich, dass das Abstützglied 240 ebenfalls angetrieben wird und das Taumelradgetriebe als Überlagerungsgetriebe wirksam ist. Dann errechnet sich die Drehzahl des Abtriebsglieds 230 aus den Drehzahlen des Antriebsglieds 210 und des Abstützglieds 240 sowie den Zähnezahlverhältnissen der Verzahnungen 271, 272, 273 und 274. Grundsätzlich ist bei einem Taumelradgetriebe der beschriebenen Bauweise auch möglich, das Abtriebsglied 230 festzusetzen oder anzutreiben, so dass es als Abstützglied wirksam ist und der Abtrieb über das Abstützglied 240 erfolgt. Die Drehzahlwandlung ändert sich hierbei allerdings, bzw. die Drehrichtung des als Abtriebsglied wirksamen Elements.

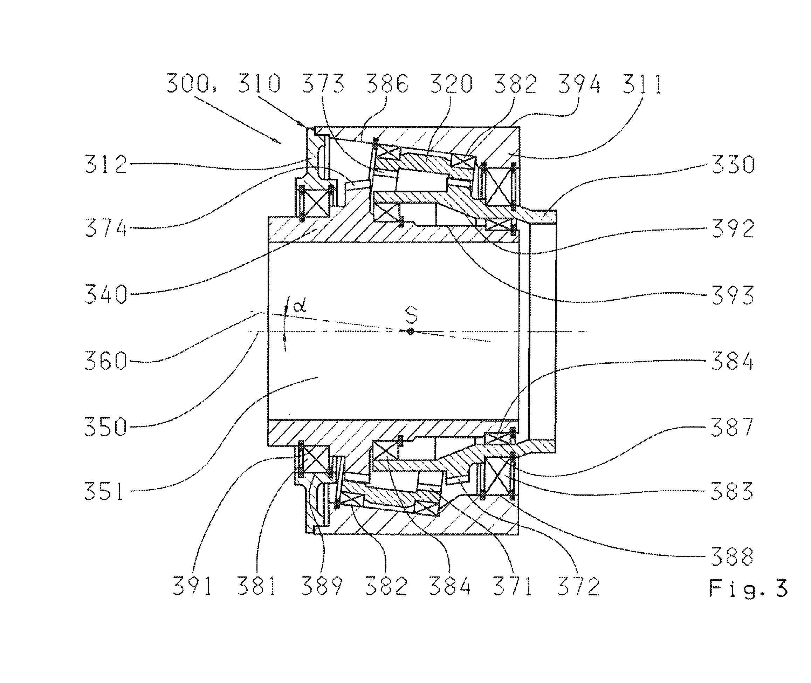

In Fig.3 ist der Längsschnitt durch ein Taumelradgetriebe 300 gezeigt, bei welchem eine an einem Übertragungsglied 320 angeordnete erste 371 und dritte Verzahnung 373 als Innenverzahnungen ausgebildet sind. Das Antriebsglied 310 ist aus einer mit einem Lagerdeckel 312 fest verbundenen Hohlwelle 311 aufgebaut. Die Hohlwelle 311 weist eine zu einer Hauptachse 350 zentrische zylindrische Außenkontur 394 und eine, um eine zu der Hauptachse 350 um den Taumelwinkel α geneigten Taumelachse 360 zentrische taumelnde Innenkontur 386 auf. Die Taumelachse 360 schneidet die Hauptachse 350 unter dem Taumelwinkel α in einem Schnittpunkt S. Aufgrund der zylindrischen Außenkontur 394 ist die Hohlwelle 311 und damit das Antriebsglied 310 radial von außen antreibbar. Zwischen der taumelnden Innenkontur 386 und dem Übertragungsglied 320 sind die zweiten Lager 382 angeordnet, wodurch das Übertragungsglied 320 um die Taumelachse 360 drehbar ist. Eine am Übertragungsglied 320 angeordnete erste Verzahnung 371 steht mit einer an einem Abtriebsglied 330 angeordneten zweiten Verzahnung 372 im Eingriff, wobei zwischen den beiden Verzahnungen eine Zähnezahldifferenz besteht. Die an dem ebenfalls um die Hauptachse 350 drehbaren Abtriebsglied 330 angeordnete zweite Verzahnung 372 weist eine Zahnform mit einer über der Zahnbreite veränderlicher Profilverschiebung auf. Eine an dem Übertragungsglied 320 befindliche dritte Verzahnung 373 steht mit einer an einem Abstützglied 340 angeordneten vierten Verzahnung 374 im Eingriff, wobei auch diese beiden Verzahnungen eine Zähnezahldifferenz aufweisen und sich bei der vierten Verzahnung 374 die Profilverschiebung über der Zahnbreite verändert. Zwischen einer ersten Außenkontur 387 am Abtriebsglied 330 und einer ersten Innenkontur 388 am Antriebsglied 310 ist ein drittes Lager 383 angeordnet, wodurch Antriebsglied 310 und Abtriebsglied 330 entkoppelt voneinander um die Hauptachse 350 rotieren können. Ein erstes Lager 381 ist zwischen einer zweiten Innenkontur 389 des Antriebsglied 310, bzw. des Lagerdeckels 311, und einer zweiten Außenkontur 391 des Abstützglieds 340 angeordnet. Zur Zentrierung des Abtriebsglieds 330 auf dem Abstützglied 340 sind zwischen einer dritten Innenkontur 392 des Abtriebsglieds 330 und einer dritten Außenkontur 393 des Abstützglieds 340 die vierten Lager 384 angeordnet. Die Anzahl der Lager zwischen den jeweiligen Getriebeteilen wird hierbei von konstruktiven Parametern und Betriebskräften bestimmt und kann von der dargestellten Anzahl abweichen. Augrund der hohlwellenartigen Gestaltung des Abstützglieds 340 und des Abtriebsglieds 330 weist das Taumelradgetriebe 300 einen zentralen Durchlass 351 auf.

Bei der Drehung des Antriebsglieds 310 führt das Übertragungsglied 320 eine Taumelbewegung aus, wobei es sich mittels der dritten Verzahnung 373 in der vierten Verzahnung 374 des Abstützglieds 340 abläuft und sich pro Umdrehung des Antriebsglieds 310 um die Zähnzahldifferenz zwischen der dritten 373 und vierten Verzahnung 374 gegenüber dem Abstützglied 340 verdreht. Diese Verdrehung wird auf das Abtriebsglied 330 übertragen, wobei durch die Zähnezahldifferenz zwischen der ersten 371 und der zweiten Verzahnung 372 eine weitere Drehzahlwandlung stattfindet. Auch in diesem Falle kann das Taumelradgetriebe 300 alternativ sowohl als Standgetriebe mit feststehendem Abstützglied 340 als auch als Umlaufgetriebe mit angetriebenem Abstützglied ausgebildet sein. Des Weiteren ist ein Tausch der Funktion von Abtriebsglied 330 und Abstützglied 340 unter Änderung der Übersetzung bzw. des Vorzeichens möglich.

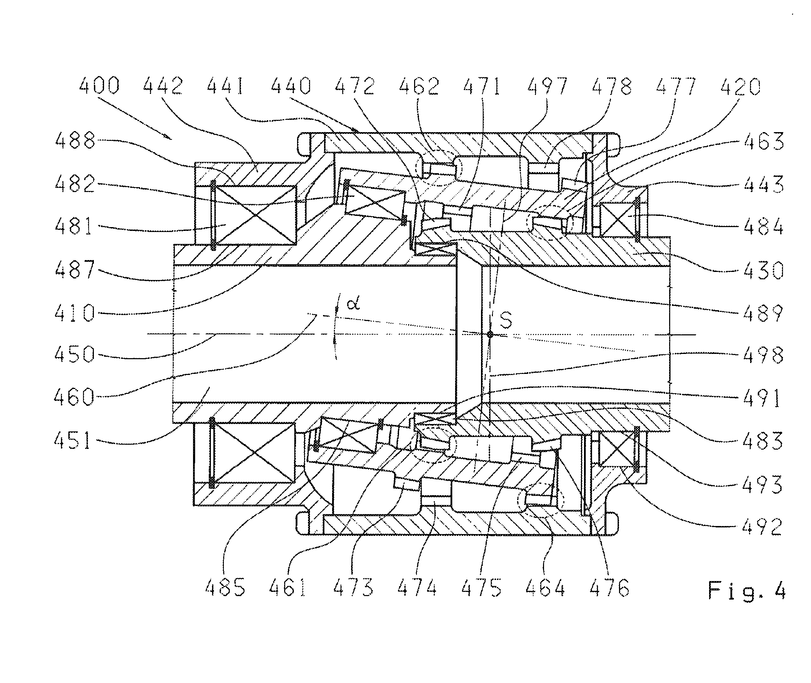

Ein Taumelradgetriebe 400 in Fig.4 besteht aus einem Antriebsglied 410, einem Übertragungsglied 420, einem Abtriebsglied 430 und einem Abstützglied 440, welches aus einem Gehäuse 441, einem mit dem Gehäuse 441 fest verbundenen ersten Lagerdeckel 442 und einem ebenfalls mit dem Gehäuse 441 fest verbundenen zweiten Lagerdeckel 443 aufgebaut ist. Das Antriebsglied 410 ist mittels eines ersten Lagers 481, das zwischen einer ersten Innenkontur 488 des ersten Lagerdeckels 442 und einer ersten Außenkontur 487 des Antriebsglieds 410 angeordnet ist, drehbar um eine Hauptachse 450 gelagert. Zwischen einer taumelnden Außenkontur 485 des Antriebsglieds und dem Übertragungsglied 420 ist ein zweites Lager 482 angeordnet, so dass das Übertragungsglied 420 um eine Taumelachse 460 rotieren kann. Die taumelnde Außenkontur 485 ist durch die Taumelachse 460, welche die Hauptachse unter dem Taumelwinkel α in dem Schnittpunkt S schneidet, zentriert. Das von dem Übertragungsglied 420 bewegte Abtriebsglied 430 trägt auf einer dritten Außenkontur 493 ein viertes Lager 484, welches in eine dritte Innenkontur 492 des zum Abstützglied 440 gehörenden zweiten Lagerdeckels 443 eingefügt ist. Antriebsglied 410 und Abtriebsglied 430 zentrieren sich gegenseitig mittels eines dritten Lagers 483, welches zwischen einer zweiten Außenkontur 491 des Antriebsglieds und einer zweiten Innenkontur 489 des Abtriebsglieds angeordnet ist.

Eine am Übertragungsglied 420 angeordnete erste Verzahnung 471 ist als Innenverzahnung ausgebildet, die mit einer als Außenverzahnung mit über der Zahnbreite veränderlicher Profilverschiebung ausgeführten zweiten Verzahnung 472 am Abtriebsglied 430 in einem ersten Zahneingriff 461 steht. Eine am Übertragungsglied 420 angeordnete dritte Verzahnung 473 in Form einer Außenverzahnung mit über der Zahnbreite veränderlicher Profilverschiebung kämmt in einem zweiten Zahneingriff 462 mit der als Innenverzahnung ausgebildeten vierten Verzahnung 474 am Abstützglied 440. Somit ist das Übertragungsglied 420 radial zwischen dem Abtriebsglied 430 und dem Abstützglied 440 angeordnet. Diese Gestaltung erlaubt es, zur Kraftübertragung vom Übertragungsglied auf das Abstützglied und das Abtriebsglied jeweils eine zusätzliche Verzahnung axial versetzt auf dem Übertragungsglied anzuordnen. So findet man zusätzlich zur ersten Verzahnung 471 eine ebenfalls als Innenverzahnung ausgeführte fünfte Verzahnung 475, welche in eine als Außenverzahnung mit über der Zahnbreite veränderlicher Profilverschiebung gestaltete, am Abtriebsglied 430 angeordnete sechste Verzahnung 476 eingreift und mit ihr einen dritten Zahneingriff 463 bildet. Axial versetzt zur außenverzahnten dritten Verzahnung 473 ist eine ebenfalls außenverzahnte siebente Verzahnung 475 mit über der Zahnbreite veränderlicher Profilverschiebung am Übertragungsglied 420 angeordnet, welche mit einer entsprechend axial zur innenverzahnten vierten Verzahnung 474 versetzten achten Verzahnung 478 in einem vierten Zahneingriff 464 steht. Der dritte Zahneingriff 463 der zusätzlichen Verzahnungen 475 und 476 zwischen Übertragungsglied 420 und Abtriebsglied 430 erfolgt um 180° versetzt zum ersten Zahneingriff 461 zwischen den beiden Getriebegliedern. Ebenso ist der zusätzlich zum zweiten Zahneingriff 462 zwischen dem Übertragungsglied 420 und dem Abstützglied 440 gebildete vierte Zahneingriff 464 um 180° zu dem zweiten Zahneingriff 462 versetzt. Hierdurch wird eine Kompensation unerwünschter Umfangskraft- und Radialkraftkomponenten aus den Verzahnungskräften bewirkt und die Lagerbelastung reduziert.

Die Bedingung für ein einwandfreies Abwälzen, bzw. einen klemmfreien Lauf, bei dem paarweisen Eingriff ist die Übereinstimmung der Übersetzungs- bzw. Zähnezahlverhältnisse beider Verzahnungspaarungen, was hier durch die symmetrische Ausbildung hinsichtlich Verzahnungsgeometrie und Zähnezahl von der ersten 471 und fünften Verzahnung 475, der zweiten 472 und sechsten Verzahnung 476, der dritten 473 und siebenten Verzahnung 477 und der vierten 474 und achten Verzahnung 478 bezüglich einer Symmetrieebene erreicht wird. Diese Symmetrieebene verläuft durch den Schnittpunkt S und steht auf der Drehachse des jeweiligen Getriebeglieds senkrecht. So sind die an dem Übertragungsglied 420 angeordnete erste 471 und fünfte Verzahnung 475 sowie die dritte 473 und siebente Verzahnung 477 symmetrisch zu einer ersten Ebene 497, die durch den Schnittpunkt S verläuft und welche senkrecht von der Taumelachse 460 durchstoßen wird. Die an dem Abtriebsglied 430 angeordnete zweite 472 und sechste Verzahnung 476 sind symmetrisch zu einer zweiten Ebene 498, die durch den Schnittpunkt S verläuft und die von der Hauptachse 450 senkrecht durchstoßen wird. Für die Symmetrie der vierten 474 und achten Verzahnung 478, die am Abstützglied 440 angeordnet sind, gilt ebenso die zweite Ebene 498. Eine übereinstimmende Ausrichtung der Zähne um den Umfang ist nicht zwingend erforderlich, kann aber fertigungstechnische Vorteile mit sich bringen, insbesondere wenn die beiden Verzahnungen in einem Arbeitsgang herstellbar sind.

Neben symmetrischen Verhältnissen zwischen den jeweils paarweise miteinander im Eingriff stehenden Verzahnungen als Bedingung für einwandfreie Abwälzverhältnisse wäre auch ein übereinstimmendes Zähnezahlverhältnis möglich, bei dem sich die beiden Verzahnungspaarungen in ihren Zähnezahlen unterscheiden. Um in beiden Verzahnungspaarungen dann ein gleiches Zähnezahlverhältnis zu erreichen, müssen die am jeweiligen Getriebeglied angeordneten Verzahnungen in einem ganzzahligen Verhältnis zueinander stehen. Diese Möglichkeit ist jedoch nur von theoretischer Bedeutung, da sie keine Vorteile und nur Nachteile hinsichtlich Herstellbarkeit mit sich bringt.

Zur Erreichung einer möglichst großen Drehzahlwandlung in dem Taumelradgetriebe 400 besteht zwischen den Verzahnungen auf dem Übertragungsglied und den Verzahnungen auf dem Abtriebsglied bzw. Abstützglied jeweils eine Zähnezahldifferenz. Wäre der Abstand zweier auf dem Übertragungsglied, Abstützglied oder Abtriebsglied angeordneten Verzahnungen von der Symmetrieebene gering, so können zumindest die Verzahnungen mit einer konstanten Profilverschiebung über der Zahnbreite zum Zweck einer gemeinsamen Bearbeitung als durchgehende Verzahnung ausgeführt sein.

Auch das Taumelradgetriebe in Fig.4 kann sowohl als Standgetriebe mit feststehendem Abstützglied 440, als auch als Umlaufgetriebe mit angetriebenem Abstützglied 340 wirksam sein. Des weiteren ist es auch hier möglich, die Funktionen von Abstützglied und Abtriebsglied unter Änderung der Übersetzung bzw. Drehrichtung zu tauschen.

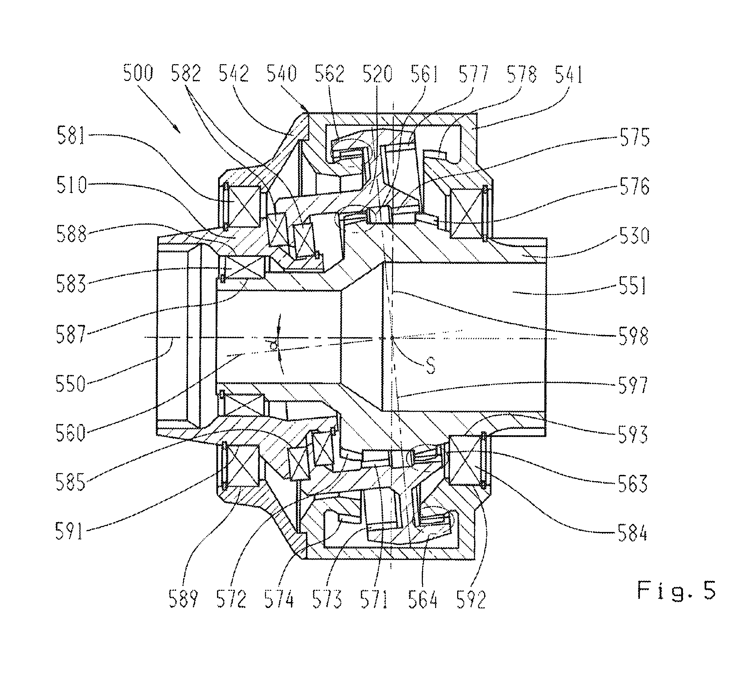

Bei einem in Fig. 5 im Längsschnitt gezeigten Taumelradgetriebe 500 trägt ein Antriebsglied 510 an einer zweiten Außenkontur 591 ein erstes Lager 581, welches radial nach außen an einer zweiten Innenkontur 589 an einem Lagerdeckels 542 angeordnet ist. Hierdurch ist das Antriebsglied 510 um eine Hauptachse 550 drehbar in dem Lagerdeckel 542 gelagert, wobei der Lagerdeckel 542 fest mit einem Gehäuse 541 verbunden ist und gemeinsam mit diesem ein Abstützglied 540 bildet. Eine zentrisch zu einer Taumelachse 560 ausgebildete taumelnde Außenkontur 585 des Antriebsglieds 510 ist um einen Taumelwinkel α zur Hauptachse 550 geneigt und trägt zwei zweite Lager 582, auf welchen ein Übertragungsglied 520 drehbar um die Taumelachse 560 gelagert ist. Die Taumelachse 560 schneidet die Hauptachse 550 in einem Schnittpunkt S unter dem Taumelwinkel α. Ein Abtriebsglied 530 trägt auf einer dritten Außenkontur 593 ein viertes Lager 584, welches radial an einer dritten Innenkontur 592 des zum Abstützglied 540 gehörenden Gehäuses 541 angeordnet ist. Zwischen einer ersten Außenkontur 587 am linken Ende des hohlwellenartig ausgebildeten Abtriebsglieds 530 und einer ersten Innenkontur 588 des gleichfalls hohlwellenartig ausgebildeten Antriebsglieds 510 ist ein drittes Lager 583 angeordnet. Die beiden dritten Lager 583 und das vierte Lager 584 ermöglichen die Drehbarkeit des Abtriebsglieds 530 um die Hauptachse 550. Aufgrund der hohlwellenartigen Ausbildung des Antriebsglieds 510 und des Abtriebsglieds 530 ist ein zentraler Durchlass 551 durch das Taumelradgetriebe 500 vorhanden.

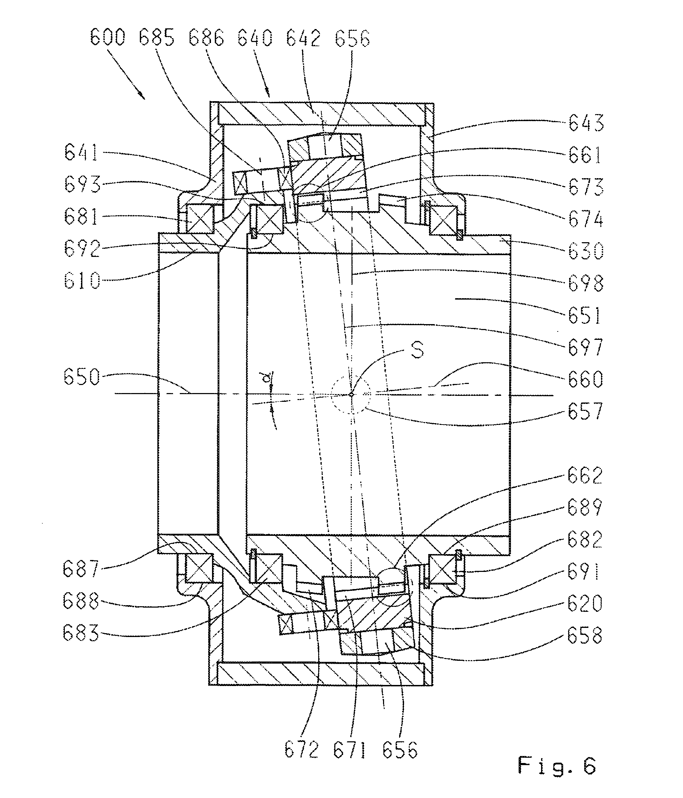

Eine erste 571 und eine dritte Verzahnung 573, beide als innenverzahnte Stirnverzahnungen ausgeführt, sind an dem Übertragungsglied 520 auf unterschiedlichen Radien angeordnet. In axialer Richtung ist neben der ersten Verzahnung 571 eine zusätzliche fünfte Verzahnung 575 und neben der dritten Verzahnung 573 eine zusätzliche siebente Verzahnung 577 jeweils als innenverzahnte Stirnverzahnung ausgebildet. Die erste Verzahnung 571 steht mit einer an einem Abtriebsglied 530 angeordneten zweiten Verzahnung 572 in einem ersten Zahneingriff 561 und die fünfte Verzahnung 575 mit einer ebenfalls am Abtriebsglied 530 angeordneten sechsten Verzahnung 576 in einem dritten Zahneingriff 563. Die zweite 572 und sechste Verzahnung 576 sind hierbei als außenverzahnte Stirnverzahnung mit über der Zahnbreite veränderlicher Profilverschiebung ausgebildet. Der erste Zahneingriff 561 ist zum dritten Zahneingriff 563 wie in Fig. 6 um 180° über den Umfang der Verzahnungen versetzt, wodurch die aus den Verzahnungskräften resultierenden Radialkomponenten kompensiert werden.

Analog gilt dies für die am Übertragungsglied 520 angeordnete dritte 573 Verzahnung, welche mit einer an einem Abstützglied 540 angeordneten vierten Verzahnung 574 in einem zweiten Zahneingriff 562 steht, und der zusätzlich zur dritten Verzahnung 573 am Übertragungsglied 520 angeordneten siebenten Verzahnung 577, welche mit einer am Abstützglied 540 angeordneten achten Verzahnung 578 einen vierten Zahneingriff 564 bildet. Auch hier sind die Zahneingriffe der beiden Zahnradpaarungen um 180° zueinander versetzt. Die vierte 574 und achte Verzahnung 578 sind als Außenverzahnungen mit über der Zahnbreite veränderlicher Profilverschiebung ausgeführt.

Die Bedingung für ein einwandfreies Abwälzen, bzw. einen klemmfreien Lauf, bei dem paarweisen Eingriff ist auch hier die Übereinstimmung der Übersetzungs- bzw. Zähnezahlverhältnisse beider Verzahnungspaarungen, was hier durch die symmetrische Ausbildung von der ersten 571 und fünften Verzahnung 575, der zweiten 572 und sechsten Verzahnung 576, der dritten 573 und siebenten Verzahnung 577 und der vierten 574 und achten Verzahnung 578 bezüglich einer Symmetrieebene erreicht wird. Die Symmetrieebene verläuft durch den Schnittpunkt S und steht senkrecht auf der Drehachse des jeweiligen Getriebeglieds. Unter der Symmetrie der jeweiligen Verzahnungen ist wie in Fig. 4 zu verstehen, dass diese eine gleiche Zähnezahl und eine identische Verzahnungsgeometrie aufweisen. Eine übereinstimmende Ausrichtung der Zähne um den Umfang ist nicht zwingend erforderlich, kann aber fertigungstechnische Vorteile mit sich bringen, insbesondere wenn die beiden Verzahnungen in einem Arbeitsgang herstellbar sind. Bei einer über der Zahnbreite veränderlichen Profilverschiebung verhalten sich die Verzahnungsgeometrien spiegelbildlich bezüglich der Symmetrieebene zueinander. So sind die an dem Übertragungsglied 520 angeordnete erste 571 und fünfte Verzahnung 575 sowie die dritte 573 und siebente Verzahnung 577 symmetrisch zu einer ersten Ebene 597, die durch den Schnittpunkt S verläuft und welche senkrecht von der Taumelachse 560 durchstoßen wird. Die an dem Abtriebsglied 530 angeordnete zweite 572 und sechste Verzahnung 576 sind symmetrisch zu einer zweiten Ebene 598, die durch den Schnittpunkt S verläuft und die von der Hauptachse 550 senkrecht durchstoßen wird. Für die Symmetrie der vierten 574 und achten Verzahnung 578, die am Abstützglied 540 angeordnet sind, gilt ebenso die zweite Ebene 598.

Die Schaffung einer beschriebenen symmetrischen Verzahnung durch eine Spiegelung in axiale Richtung ist, wie auch in Fig. 4 gezeigt, nur möglich, wenn die erste 571 und dritte Verzahnung 573 des Übertragungsglieds 520 unterschiedliche Durchmesser aufweisen.

Auch das Taumelradgetriebe 500 kann bei feststehendem Abstützglied 540 als Standgetriebe oder mit angetriebenem Abstützglied 540 als Umlaufgetriebe wirksam sein. Des Weiteren ist es auch hier möglich, die Funktionen von Abstützglied und Abtriebsglied unter Änderung der Übersetzung bzw. der Drehrichtung zu tauschen.

Fig. 6 zeigt einen Längsschnitt durch ein Taumelradgetriebe 600, welches aus einem Antriebsglied 610, einem Übertragungsglied 620, einem Abtriebsglied 630 und einem Abstützglied 640 besteht. Das Abstützglied 640 wird aus einem ersten Lagerdeckel 641, einem Gehäusemittelstück 642 und einem zweiten Lagerdeckel 643 gebildet. Das hohlwellenartige Antriebsglied 610 weist wie das gleichfalls hohlwellenartige Abtriebsglied 630 einen zentralen Durchlass 651 auf, was eine zentrale Durchführung von mechanischen Antriebssträngen oder Leitungen durch das Taumelradgetriebe möglich macht. Das Antriebsglied 610 ist mittels eines ersten Lagers 681, welches zwischen einer ersten Außenkontur 687 des Antriebsglieds 610 und einer ersten Innenkontur 688 des ersten Lagerdeckels 641 angeordnet ist, drehbar um eine Hauptachse 650 gelagert. Das Abtriebsglied 630 ist mittels eines zweiten Lagers 682, welches zwischen einer zweiten Außenkontur 689 am Abtriebsglied 630 und einer zweiten Innenkontur 691 des zweiten Lagerdeckels 643 angeordnet ist, ebenfalls drehbar um die Hauptachse 650 gelagert. Mittels eines dritten Lagers 683, welches zwischen einer dritten Außenkontur 692 des Abtriebsglieds 630 und einer dritten Innenkontur 693 des Antriebsglieds 610 angeordnet ist, wird das Abtriebsglied 630 in dem Antriebsglied 610 zentriert. Ein erstes Koppelmittel, welches zwischen Übertragungsglied 620 und Abtriebsglied 630 angeordnet ist, besteht aus zwei Verzahnungspaarungen. Ein zweites Koppelmittel zwischen Übertragungsglied 620 und Abstützglied 640 ist als kardanische Aufhängung ausgebildet und besteht aus zwei ersten Gelenkbolzen 656, zwei zweiten Gelenkbolzen 657 und einem Kardanring 658. Hierbei ist das Übertragungsglied 620 mittels der sich radial gegenüberliegenden und eine Drehachse bildenden ersten Gelenkbolzen 656 in dem Kardanring 658 drehbar gelagert. Die zweiten Gelenkbolzen 657 sind ebenfalls sich radial gegenüberliegend und eine Drehachse bildend fest in dem Gehäusemittelstück 642 des Abstützglieds 640 angeordnet, wobei der Kardanring 658 um die zweiten Gelenkbolzen 657 drehbar mit diesen verbunden ist. Die ersten 656 und zweiten Gelenkbolzen 657 sind um 90° am Umfang des Kardanrings 658 versetzt angeordnet, so dass die durch die jeweiligen Gelenkbolzen verlaufenden Drehachsen senkrecht aufeinander stehen.

Eine taumelnde Kontur des Antriebsglieds 610 und damit der Taumelwinkel α einer Taumelachse 660 wird durch die Anordnung und Lage von mindestens zwei Rollkörpern 686 gebildet, wobei die Rollkörper um eine gemeinsame Abrollachse 685 drehbar sind, die in einem Winkel von 90°-α zur Hauptachse 650 steht und diese schneidet. Mit der Lage der mit dem Antriebsglied 610 umlaufenden Abrollachse 685 ist die Lage der Taumelachse 660 gegeben. Die Rollkörper 686 wälzen auf dem kardanisch aufgehängten Übertragungsglied 620 ab und versetzen dieses in eine Taumelbewegung. Aufgrund der bezüglich der Hauptachse 650 drehfesten Anordnung des Kardanringes 658 im Abstützglied 640 führt das Abstützglied 620 nur eine Taumelbewegung aus, eine relative Drehung zum Abstützglied 640 ist nicht möglich. Das Übertragungsglied 620 weist eine innenverzahnte erste Verzahnung 671 auf, welche in eine zweite Verzahnung 672 eingreift, die am Abtriebsglied 630 als Außenverzahnung mit über der Zahnbreite veränderlicher Profilverschiebung ausgebildet ist. Zwischen der ersten 671 und der zweiten Verzahnung 672 ist eine Zähnezahldifferenz vorhanden, so dass eine Drehzahlwandlung von der hohen Drehzahl des Antriebsglieds 610 zum langsam drehenden Abtriebsglied 630 stattfindet.

An dem Übertragungsglied 620 ist bezüglich einer ersten Ebene 697 symmetrisch zur ersten Verzahnung 671 eine dritte Verzahnung 673 ausgebildet, welche mit einer am Abtriebsglied 630 angeordneten vierten Verzahnung 674 im Eingriff steht. Die vierte Verzahnung 674 ist bezüglich einer zweiten Ebene 698 symmetrisch zur zweiten Verzahnung 672 und geht durch Spiegelung dieser an der zweiten Ebene 698 hervor. Die Symmetrie der jeweiligen Verzahnungen bedeutet eine spiegelbildliche Übereinstimmung der Verzahnungsgeometrie, Zahnform und Zähnezahl. Eine diesbezügliche Übereinstimmung ist eine Bedingung für einen klemmfreien Lauf der Zahnradpaarungen. Die erste Ebene 697 steht senkrecht auf der Taumelachse 660 und beinhaltet den Schnittpunkt S zwischen Taumelachse 660 und Hauptachse 650, die zweite Ebene 698 beinhaltet ebenfalls den Schnittpunkt S, wird aber senkrecht von der Hauptachse 650 durchstochen. Aufgrund des geringen Abstandes von der ersten 671 zur dritten Verzahnung 673 und der identischen Zahngeometrie ist die erste 671 und dritte Verzahnung 673 aus Gründen der einfachen Herstellung gemeinsam bearbeitet und bildet eine durchgängige Verzahnung. Ein erster Zahneingriff 661 zwischen der ersten 671 und zweiten Verzahnung 672 ist um 180° zu einem zweiten Eingriff 662 zwischen der dritten 673 und vierten Verzahnung 674 versetzt, wodurch die radialen Verzahnungskräfte kompensiert werden. Des Weiteren steigt das übertragbare Moment mit einem zusätzlichen Verzahnungseingriff. Eine vorteilhafte Wirkung des außenliegenden Kardanrings ist die Ermöglichung eines zentralen Durchlasses bei nur einer Drehzahlwandlung. Die einfache Drehzahlwandlung ermöglicht einen höheren Wirkungsgrad des Taumelradgetriebes.

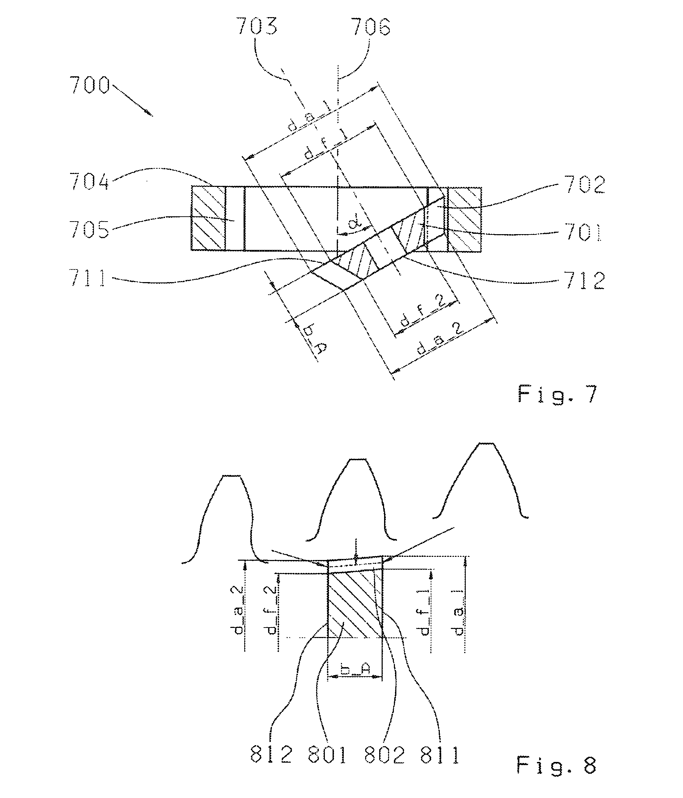

In Fig. 7 ist die Ausführung der Verzahnung für eine Stirnradstufe 709 mit nicht parallelen Achsen anhand einer schematischen Schnittzeichnung dargestellt. Hierbei steht ein außenverzahntes erstes Rad 701 mit einem innenverzahnten zweiten Rad 704 im Eingriff. Eine erste Achse 703, um welche das erste Rad 701 drehbar ist, ist um einen Winkel α zu einer zum zweiten Rad 704 zentrischen Achse 706 geneigt. Hierdurch würden sich fehlerhafte Eingriffsverhältnisse ergeben, die jedoch mittels einer Änderung der Verzahnungsgeometrie an mindestens einem der Räder 701 und 704 berichtigt werden können. In diesem Falle ist die am zweiten Rad 704 angeordnete zweite Verzahnung 705 als gerade Innenverzahnung ausgeführt. Die Zahnform der ersten Verzahnung 702 weist eine über die Zahnbreite b_A veränderliche Profilverschiebung auf. Augrund der veränderlichen Profilverschiebung ist ein erster Kopfkreisdurchmesser d_a_1 auf einer ersten Seite 711 des ersten Rades 701 größer als ein zweiter Kopfkreisdurchmesser d_a_2 auf einer zweiten Seite 712 des ersten Rades 701. Ebenso verhält sich ein erster Fußkreisdurchmesser d_f_1 zu einem zweiten Fußkreisdurchmesser d_f_2. Hierdurch ergibt sich eine kegelstumpfförmige Hüllkontur im Bereich des Zahnkopfes und des Zahnfußes wodurch der störende Einfluss des Winkels α für den Zahneingriff ausgeglichen wird. Im Falle eines Taumelradgetriebes wird die erste Achse 703 als Taumelachse bezeichnet, da diese dann um die zweite Achse 706 umläuft und das erste Rad 701 relativ zur ersten Achse 703 eine Drehbewegung bzw. für einen raumfesten Beobachter eine Taumelbewegung ausführt.

Fig. 8 zeigt in einem schematischen Längsschnitt die Zahnform eines außenverzahnten Rades 801, welches eine Verzahnung 802 mit einer über einer Zahnbreite b_A veränderlichen Profilverschiebung aufweist. Augrund der veränderlichen Profilverschiebung ist ein erster Kopfkreisdurchmesser d_a_1 auf einer ersten Seite 811 des Rades 801 größer als ein zweiter Kopfkreisdurchmesser d_a_2 auf einer zweiten Seite 812 des Rades 801. Ebenso verhält sich ein erster Fußkreisdurchmesser d_f_1 zu einem zweiten Fußkreisdurchmesser d_f_2. Hierdurch entsteht eine kegelstumpfförmige Hüllkontur im Bereich des Zahnkopfes und des Zahnfußes. Wie sich die Zahnform über die Zahnbreite b_A verändert, ist anhand von drei Zahnquerschnittsformen an der ersten Seite 811, der zweiten Seite 812 und in der Mitte der Zahnbreite b_A dargestellt.

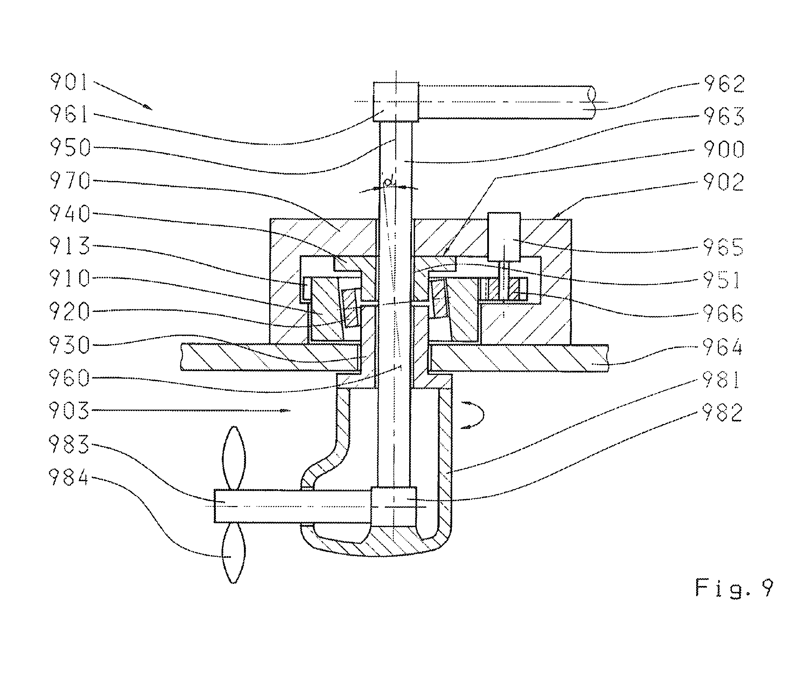

Fig. 9 zeigt anhand einer schematischen Darstellung das Beispiel einer Anwendung eines Taumelradesgetriebes 900 zum Steuern eines Schiffsantriebs 901. Der Schiffsantrieb 901 wird hierbei aus einer Steuerungseinrichtung 902, einer als ein Ruderpropeller ausgeführten Schubeinheit 903 und einer ersten 962 und zweiten Antriebswelle 963 sowie einem ersten Winkeltrieb 961 gebildet. Die erste 962 und zweite Antriebswelle 963 sind hierbei mittels des fest in einem Schiffsrumpf 964 angeordneten ersten Winkeltriebs 961 gekoppelt. Die Steuerungseinrichtung 902 setzt sich aus einem Taumelradgetriebe 900, einem Elektromotor 965 mit einem Stirnrad 966, sowie einem Steuergehäuse 970 zusammen und ist ebenfalls im Schiffsrumpf 964 fest angeordnet. Das Taumelradgetriebe 900 wird aus einem Antriebsglied 910, einem Übertragungsglied 920, einem Abtriebsglied 930 und einem Abstützglied 940 gebildet, wobei die Anordnung und Ausbildung der Getriebeglieder der unter Fig. 4 beschriebenen Art und Weise entspricht. Hierbei befinden sich das Übertragungsglied 920, das Abtriebsglied 930 und das Abstützglied 940 radial innerhalb des Antriebsglieds 910. Aufgrund der hohlwellenartigen Gestaltung des Abtriebsglieds 930 und des Abstützglieds 940 weist das Taumelradgetriebe 900 einen zentralen Durchlass 951 auf. Das Antriebsglied 910 und das Abtriebsglied 930 sind um eine Hauptachse 950 drehbar angeordnet. Über die Darstellung in Fig. 4 hinausgehend weist das Antriebsglied 910 an seinem äußeren Umfang eine Antriebsverzahnung 913 auf. Das Abstützglied 940 ist mit dem Steuergehäuse 970 fest verbunden. Das Stirnrad 986 des ebenfalls fest am Steuergehäuse 970 angeordneten Elektromotors 965 steht mit der Stirnverzahnung 913 des Antriebsglieds 910 im Eingriff. Das Abtriebsglied 930 ist mit dem Gehäuse 981 der im Schiffsrumpf 964 um die Hauptachse 950 drehbaren Schubeinheit 903 fest verbunden. Die Schubeinheit 903 besteht aus dem Gehäuse 981, einer im Gehäuse 981 drehbar angeordneten Propellerwelle 983 mit einem an dieser angeordneten Propeller 984, sowie einem fest mit dem Gehäuse 981 verbundenen zweiten Winkeltrieb 982, über welchen die Propellerwelle 983 mit der zweiten Welle 963 gekoppelt ist. Die erste Antriebswelle 962 wird von einem Motor des Schiffes angetrieben. In dem ersten Winkeltrieb 961 wird die Drehbewegung auf die zweite Antriebswelle 963 umgelenkt. Die zweite Antriebswelle 963 ist um die Hauptachse 950 drehbar angeordnet und führt aus dem Inneren des Schiffsrumpfes auf die Unterseite des Schiffes in die Schubeinheit 903. Dort wird die Drehbewegung der zweiten Antriebswelle 963 in einem zweiten Winkeltrieb 982 in horizontale Richtung auf die Propellerwelle 983 umgelenkt und somit der Propeller 984 angetrieben.

Zur Änderung der Fahrtrichtung wird die Schubeinheit 903 um die Hauptachse 950 geschwenkt, wodurch sich die Richtung des Propellerschubs ändert. Bei einer gewünschten Richtungsänderung wird die zur Schwenkung der Schubeinheit erforderliche mechanische Energie von dem Elektromotor 965 erzeugt. Die Aufgabe des Taumelradgetriebes 900 ist es nun, die hohe Drehzahl des Elektromotors 965 in eine niedrige Winkelgeschwindigkeit der Schubeinheit zu wandeln. Die erste Übersetzungsstufe bildet das Stirnrad 966 des Elektromotors 965 und die Antriebsverzahnung 913 des Antriebsglieds, wo aufgrund der großen Durchmesserunterschiede die Drehzahl des Antriebsglieds 910 deutlich geringer ist wie die des Elektromotors 965. Gemäß der Wirkungsweise des Taumelradgetriebes reduziert sich die Drehzahl bis zum Abtriebsglied weiter, so dass durch Einschalten des Elektromotors 965 eine feinfühlige Steuerbewegung möglich ist.

### Bezugszeichen

- 100: Taumelradgetriebe
- 110: Antriebsglied
- 115: gekröpfter Abschnitt des Antriebsglieds
- 120: Übertragungsglied
- 130: Abtriebsglied
- 140: Abstützglied
- 150: Hauptachse
- 160: Taumelachse
- 170: Gehäuse
- 171: erste Verzahnung
- 172: zweite Verzahnung
- 173: dritte Verzahnung
- 174: vierte Verzahnung
- 200: Taumelradgetriebe
- 210: Antriebsglied
- 220: Übertragungsglied
- 230: Abtriebsglied
- 231: Hohlrad des Abtriebsglieds
- 232: Flansch der Abtriebsglieds
- 240: Abstützglied
- 241: Gehäuse des Abstützglieds
- 242: Lagerdeckel des Abstützglieds
- 250: Hauptachse
- 251: zentraler Durchlass
- 260: Taumelachse
- 271: erste Verzahnung
- 272: zweite Verzahnung
- 273: dritte Verzahnung
- 274: vierte Verzahnung
- 281: erstes Lager
- 282: zweites Lager
- 283: drittes Lager
- 284: viertes Lager
- 285: taumelnde Außenkontur der Antriebswelle
- 287: erste Außenkontur
- 288: erste Innenkontur
- 289: zweite Innenkontur
- 291: zweite Außenkontur
- 292: dritte Innenkontur
- 293: dritte Außenkontur
- 300: Taumelradgetriebe
- 310: Antriebsglied
- 311: Hohlwelle des Antriebsglieds
- 312: Lagerdeckel des Antriebsglieds
- 320: Übertragungsglied
- 330: Abtriebsglied
- 340: Abstützglied
- 350: Hauptachse
- 351: zentraler Durchlass
- 360: Taumelachse
- 371: erste Verzahnung
- 372: zweite Verzahnung
- 373: dritte Verzahnung
- 374: vierte Verzahnung
- 381: erstes Lager
- 382: zweites Lager
- 383: drittes Lager
- 384: viertes Lager
- 386: taumelnde Innenkontur der Antriebswelle
- 387: erste Außenkontur am Abtriebsglied
- 388: erste Innenkontur
- 389: zweite Innenkontur
- 391: zweite Außenkontur
- 392: dritte Innenkontur
- 393: dritte Außenkontur
- 394: zylindrische Außenkontur
- 400: Taumelradgetriebe
- 410: Antriebsglied
- 420: Übertragungsglied
- 430: Abtriebsglied
- 440: Abstützglied
- 441: Gehäuse des Abstützglieds
- 442: erster Lagerdeckel des Abstützglieds
- 443: zweiter Lagerdeckel des Abstützglieds
- 450: Hauptachse
- 451: zentraler Durchlass
- 460: Taumelachse
- 461: erster Zahneingriff
- 462: zweiter Zahneingriff
- 463: dritter Zahneingriff
- 464: vierter Zahneingriff
- 471: erste Verzahnung
- 472: zweite Verzahnung
- 473: dritte Verzahnung
- 474: vierte Verzahnung
- 475: fünfte Verzahnung
- 476: sechste Verzahnung
- 477: siebente Verzahnung
- 478: achte Verzahnung
- 481: erstes Lager
- 482: zweites Lager
- 483: drittes Lager
- 484: viertes Lager
- 485: taumelnde Außenkontur der Antriebswelle
- 487: erste Außenkontur
- 488: erste Innenkontur
- 489: zweite Innenkontur
- 491: zweite Außenkontur
- 492: dritte Innenkontur
- 493: dritte Außenkontur
- 497: erste Ebene
- 498: zweite Ebene
- 500: Taumelradgetriebe
- 510: Antriebsglied
- 520: Übertragungsglied
- 530: Abtriebsglied
- 540: Abstützglied
- 541: Gehäuse des Abstützglieds
- 542: Lagerdeckel des Abstützglieds
- 550: Hauptachse
- 551: zentraler Durchlass
- 560: Taumelachse
- 561: erster Zahneingriff
- 562: zweiter Zahneingriff
- 563: dritter Zahneingriff
- 564: vierter Zahneingriff
- 571: erste Verzahnung
- 572: zweite Verzahnung
- 573: dritte Verzahnung
- 574: vierte Verzahnung
- 575: fünfte Verzahnung
- 576: sechste Verzahnung
- 577: siebente Verzahnung
- 578: achte Verzahnung
- 581: erstes Lager
- 582: zweites Lager
- 583: drittes Lager
- 584: viertes Lager
- 585: taumelnde Außenkontur der Antriebswelle
- 587: erste Außenkontur
- 588: erste Innenkontur
- 589: zweite Innenkontur
- 591: zweite Außenkontur
- 592: dritte Innenkontur
- 593: dritte Außenkontur
- 597: erste Ebene
- 598: zweite Ebene
- 600: Taumelradgetriebe
- 610: Antriebsglied
- 620: Übertragungsglied
- 630: Abtriebsglied
- 640: Abstützglied
- 641: erster Lagerdeckel
- 642: Gehäusemittelstück
- 643: zweiter Lagerdeckel
- 650: Hauptachse
- 656: erster Gelenkbolzen
- 657: zweiter Gelenkbolzen
- 658: Kardanring
- 660: Taumelachse
- 661: erster Zahneingriff
- 662: zweiter Zahneingriff
- 671: erste Verzahnung
- 672: zweite Verzahnung
- 673: dritte Verzahnung
- 674: vierte Verzahnung
- 681: erstes Lager
- 682: zweites Lager
- 683: drittes Lager
- 685: Abrollachse
- 686: Rollkörper
- 687: erste Außenkontur
- 688: erste Innenkontur
- 689: zweite Außenkontur
- 691: zweite Innenkontur
- 692: dritte Außenkontur
- 693: dritte Innenkontur
- 697: erste Ebene
- 698: zweite Ebene

- 700: Stirnradstufe
- 701: erstes Rad
- 702: erste Verzahnung
- 703: erste Achse
- 704: zweites Rad
- 705: zweite Verzahnung
- 706: zweite Achse
- 711: erste Seite
- 712: zweite Seite
- 801: Rad mit Außenverzahnung
- 802: Verzahnung
- 811: erste Seite
- 812: zweite Seite
- 900: Taumelradgetriebe
- 901: Schiffsantrieb
- 902: Steuereinrichtung
- 903: Schubeinheit
- 910: Antriebsglied
- 913: Antriebsverzahnung des Antriebsglieds
- 920: Übertragungsglied
- 930: Abtriebsglied
- 940: Abstützglied
- 950: Hauptachse
- 951: zentraler Durchlass
- 961: erster Winkeltrieb
- 962: erste Antriebswelle
- 963: zweite Antriebswelle
- 964: Schiffsrumpf
- 965: Elektromotor
- 966: Stirnrad
- 970: Steuergehäuse
- 981: Gehäuse der Schubeinheit
- 982: zweiter Winkeltrieb
- 983: Propellerwelle
- 984: Propeller

- b_A: Zahnbreite
- d_a_1: erster Kopfkreisdurchmesser
- d_a_2: zweiter Kopfkreisdurchmesser
- d_f_1: erster Fußkreisdurchmesser
- d_f_2: zweiter Fußkreisdurchmesser
- S: Schnittpunkt zwischen Hauptachse und Taumelachse
- α: Taumelwinkel

## Patentansprüche

1. Taumelradgetriebe (100, 200, 300, 400, 500, 600, 900), bestehend aus einem um eine Hauptachse (150, 250, 350, 450, 550, 650, 950) drehbaren Antriebsglied (110, 210, 310, 410, 510, 610, 910), einem Übertragungsglied (120, 220, 320, 420, 520, 620, 920), welches drehbar um eine Taumelachse (160, 260, 360, 460, 560, 660, 960) angeordnet ist, wobei die Taumelachse die Hauptachse unter einem Taumelwinkel (α) schneidet und mit dem Antriebsglied um die Hauptachse umläuft, sowie einem Abtriebsglied (130, 230, 330, 430, 530, 630, 930) und einem Abstützglied (140, 240, 340, 440, 540, 640, 940), wobei zwischen dem Übertragungsglied und dem Abtriebsglied ein erstes Koppelmittel und zwischen dem Übertragungsglied und dem Abstützglied ein zweites Koppelmittel angeordnet ist und wobei mindestens eines der beiden Koppelmittel eine Verzahnungspaarung ist, **dadurch gekennzeichnet, dass** die Verzahnungen (171, 271, 371, 471, 571, 671, 172, 272, 372, 472, 572, 672) der als Koppelmittel dienenden Verzahnungspaarung als Stirnverzahnungen ausgebildet sind.

2. Taumelradgetriebe (100, 200, 300, 400, 500) nach Anspruch 1, **dadurch gekennzeichnet, dass** das erste Koppelmittel als mindestens eine erste Verzahnungspaarung, bestehend aus einer ersten (171, 271, 371, 471, 571) und einer zweiten Verzahnung (172, 272, 372, 472, 572) und das zweite Koppelmittel als mindestens eine zweite Verzahnungspaarung, bestehend aus einer dritten (173, 273, 373, 473, 573) und einer vierten Verzahnung (174, 274, 374, 474, 574), ausgebildet ist.

3. Taumelradgetriebe (200, 300, 400, 500) nach Anspruch 2, **dadurch gekennzeichnet, dass** zwischen der ersten (171, 271, 371, 471, 571) und der zweiten Verzahnung (172, 272, 372, 472, 572) und der dritten (173, 273, 373, 473, 573) und vierten Verzahnung (174, 274, 374, 474, 574) eine Zähnezahldifferenz vorhanden ist.

4. Taumelradgetriebe (200) nach mindestens einem der Ansprüche 1 bis 3, **dadurch gekennzeichnet, dass** die am Übertragungsglied (220) angeordnete erste (271) und dritte (273) Verzahnung als Außenverzahnungen ausgebildet sind und die zweite Verzahnung (272) am Abtriebsglied (230) sowie die vierte Verzahnung (274) am Abstützglied (240) jeweils als Innenverzahnung ausgeführt sind.

5. Taumelradgetriebe (300) nach mindestens einem der Ansprüche 1 bis 3, **dadurch gekennzeichnet, dass** die am Übertragungsglied (320) angeordnete erste (371) und dritte (373) Verzahnung als Innenverzahnungen ausgebildet sind und die am Abtriebsglied (330) angeordnete zweite Verzahnung (372) sowie die vierte Verzahnung (374) am Abstützglied (340) jeweils als Außenverzahnung ausgeführt sind.

6. Taumelradgetriebe (400) nach mindestens einem der Ansprüche 1 bis 3, **dadurch gekennzeichnet, dass** die am Übertragungsglied (420) angeordnete erste Verzahnung (471) und die am Abstützglied (440) angeordnete vierte Verzahnung (474) als Innenverzahnungen und die am Abtriebsglied (430) angeordnete zweite Verzahnung (472) und die am Übertragungsglied (420) angeordnete dritte Verzahnung (473) als Außenverzahnungen ausgeführt sind.

7. Taumelradgetriebe (500) nach mindestens einem der Ansprüche 1 bis 3, **dadurch gekennzeichnet, dass** die am Übertragungsglied (520) angeordnete erste (571) und dritte (573) Verzahnung als Innenverzahnungen und die am Abtriebsglied (530) angeordnete zweite Verzahnung (572) und die am Abstützglied (540) angeordnete vierte Verzahnung (574) als Außenverzahnungen ausgebildet sind, wobei die erste und dritte Verzahnung konzentrisch mit unterschiedlichen Durchmessern am Übertragungsglied (520) angeordnet sind.

8. Taumelradgetriebe (600) nach Anspruch 1, **dadurch gekennzeichnet, dass** das erste Koppelmittel als mindestens eine erste Verzahnungspaarung, bestehend aus einer ersten (671) und einer zweiten Verzahnung (672), ausgebildet ist, und das zweite Koppelmittel als kardanische Aufhängung (656, 657, 658) ausgebildet ist.

9. Taumelradgetriebe (400, 500, 600) nach einem der Ansprüche 6, 7 oder 8, **dadurch gekennzeichnet, dass** zur Kompensation der aus den Verzahnungen resultierenden Radialkräfte mindestens ein Koppelmittel aus jeweils zwei Verzahnungspaarungen besteht, wobei die Zahneingriffe (461, 462, 463, 464, 561, 562, 563, 564, 661, 662) der die zwei Verzahnungspaarungen bildenden Verzahnungen (471, 472, 475, 476, 473, 474, 477, 478, 571, 572, 575, 576, 573, 574, 577, 578, 671, 672, 673, 674) um 180° zueinander versetzt angeordnet sind.

10. Taumelradgetriebe (200, 400, 500) nach Anspruch 2 und einem der Ansprüche 4, 6 oder 7, **dadurch gekennzeichnet, dass** das Antriebsglied (210, 410, 510) eine zentrisch zu einer Taumelachse (260, 460, 560) angeordnete taumelnde Außenkontur (285, 485, 585) aufweist, um welche das Übertragungsglied (220, 420, 520) mittels einer Lagerung (282, 482, 582) drehbar angeordnet ist.

11. Taumelradgetriebe (300) nach Anspruch 5, **dadurch gekennzeichnet, dass** das Antriebsglied (310) eine zentrisch zu einer Taumelachse (360) angeordnete taumelnde Innenkontur (386) aufweist, innerhalb welcher das Übertragungsglied (320) mittels einer Lagerung (382) drehbar angeordnet ist.

12. Taumelradgetriebe (200, 300, 400, 500, 600) nach mindestens einem der Ansprüche 2 bis 8, **dadurch gekennzeichnet, dass** mindestens eine Verzahnung (271, 371, 471, 571, 671, 272, 372, 472, 572, 672, 273, 373, 473, 573, 673, 274, 374, 474, 574, 674, 475, 476, 477, 478, 575, 576, 577, 578) einer Verzahnungspaarung als eine evolventische Stirnverzahnung mit einer über der Zahnbreite veränderlichen Profilverschiebung ausgebildet ist.

13. Taumelradgetriebe (200, 300, 400, 500, 600) nach mindestens einem der vorangegangenen Ansprüche, **dadurch gekennzeichnet, dass** dieses entlang seiner Hauptachse (250, 350, 450, 550, 650, 950) einen zentralen Durchlass (251, 351, 451, 551, 651, 951) aufweist.

14. Schiffsantrieb (901) bestehend aus einer Steuereinrichtung (902) mit einem Taumelradgetriebe (900) nach mindestens einem der vorangegangenen Ansprüche zur Betätigung einer schwenkbaren Schubeinheit (903), wobei in der Steuereinrichtung (902) ein Elektromotor (965) zum Antrieb eines um eine Hauptachse (950) drehbaren Antriebsglieds (910) mittels eines Stirnrads (966) und einer Antriebsverzahnung (913) angeordnet ist, und wobei an dem Antriebsglied (910) ein Übertragungsglied (920) drehbar um eine Taumelachse (960) angeordnet ist, wobei das Übertragungsglied (920) ebenso wie das Abtriebsglied (930) und das Abstützglied (940) einen zentralen Durchlass (951) aufweist, in welchem eine zweite Antriebswelle (963) um die Hauptachse (950) drehbar angeordnet ist zum Antrieb der Propellerwelle (983), und wobei das Abtriebsglied (930) zwecks Einstellung der Fahrtrichtung mit einer schwenkbaren Schubeinheit (903) wirkverbunden ist.

## Claims

1. Swashplate mechanism (100, 200, 300, 400, 500, 600, 900), consisting of a drive member (110, 210, 310, 410, 510, 610, 910) rotatable about a main axis (150, 250, 350, 450, 550, 650, 950), of a transmission member (120, 220, 320, 420, 520, 620, 920) which is arranged rotatably about a wobble axis (160, 260, 360, 460, 560, 660, 960), the wobble axis intersecting the main axis at a wobble angle (α) and revolving together with the drive member about the main axis, and also of an output member (130, 230, 330, 430, 530, 630, 930) and of a support member (140, 240, 340, 440, 540, 640, 940), a first coupling means being arranged between the transmission member and the output member and a second coupling means being arranged between the transmission member and the support member, and at least one of the two coupling means being a toothing pairing, **characterized in that** the toothings (171, 271, 371, 471, 571, 671, 172, 272, 372, 472, 572, 672) of the toothing pairing serving as coupling means are designed as spur toothings.

2. Swashplate mechanism (100, 200, 300, 400, 500) according to Claim 1, **characterized in that** the first coupling means is designed as at least one first toothing pairing, consisting of a first (171, 271, 371, 471, 571) and of a second (172, 272, 372, 472, 572) toothing, and the second coupling means is designed as at least one second toothing pairing, consisting of a third (173, 273, 373, 473, 573) and of a fourth (174, 274, 374, 474, 574) toothing.

3. Swashplate mechanism (200, 300, 400, 500) according to Claim 2, **characterized in that** a difference in the number of teeth is present between the first (171, 271, 371, 471, 571) and the second (172, 272, 372, 472, 572) toothing and the third (173, 273, 373, 473, 573) and the fourth (174, 274, 374, 474, 574) toothing.

4. Swashplate mechanism (200) according to at least one of Claims 1 to 3, **characterized in that** the first (271) and the third (273) toothing arranged on the transmission member (220) are designed as external toothings, and the second toothing (272) on the output member (230) and the fourth toothing (274) on the support member (240) are designed in each case as an internal toothing.

5. Swashplate mechanism (300) according to at least one of Claims 1 to 3, **characterized in that** the first (371) and the third (373) toothing arranged on the transmission member (320) are designed as internal toothings, and the second toothing (372) arranged on the output member (330) and the fourth toothing (374) on the support member (340) are designed in each case as an external toothing.

6. Swashplate mechanism (400) according to at least one of Claims 1 to 3, **characterized in that** the first toothing (471) arranged on the transmission member (420) and the fourth toothing (474) arranged on the support member (440) are designed as internal toothings, and the second toothing (472) arranged on the output member (430) and the third toothing (473) arranged on the transmission member (420) are designed as external toothings.

7. Swashplate mechanism (500) according to at least one of Claims 1 to 3, **characterized in that** the first (571) and the third (573) toothing arranged on the transmission member (520) are designed as internal toothings, and the second toothing (572) arranged on the output member (530) and the fourth toothing (574) arranged on the support member (540) are designed as external toothings, the first and the third toothing being arranged concentrically with different diameters on the transmission member (520).

8. Swashplate mechanism (600) according to Claim 1, **characterized in that** the first coupling means is designed as at least one first toothing pairing, consisting of a first (671) and of a second (672) toothing, and the second coupling means is designed as a cardanic suspension (656, 657, 658).

9. Swashplate mechanism (400, 500, 600) according to one of Claims 6, 7 or 8, **characterized in that**, to compensate the radial forces resulting from the toothings, at least one coupling means consists in each case of two toothing pairings, with the meshings (461, 462, 463, 464, 561, 562, 563, 564, 661, 662) of the toothings (471, 472, 475, 476, 473, 474, 477, 478, 571, 572, 575, 576, 573, 574, 577, 578, 671, 672, 673, 674) which form the two toothing pairings being arranged so as to be offset at 180° to one another.

10. Swashplate mechanism (200, 400, 500) according to Claim 2 and one of Claims 4, 6 or 7, **characterized in that** the drive member (210, 410, 510) has a wobbling outer contour (285, 485, 585) which is arranged centrically to a wobble axis (260, 460, 560) and about which the transmission member (220, 420, 520) is arranged rotatably by means of a mounting (282, 482, 582).

11. Swashplate mechanism (300) according to Claim 5, **characterized in that** the drive member (310) has a wobbling inner contour (386) which is arranged centrically to a wobble axis (360) and within which the transmission member (320) is arranged rotatably by means of a mounting (382).

12. Swashplate mechanism (200, 300, 400, 500, 600) according to at least one of Claims 2 to 8, **characterized in that** at least one toothing (271, 371, 471, 571, 671, 272, 372, 472, 572, 672, 273, 373, 473, 573, 673, 274, 374, 474, 574, 674, 475, 476, 477, 478, 575, 576, 577, 578) of a toothing pairing is designed as an involute spur toothing with profile displacement variable over the tooth width.

13. Swashplate mechanism (200, 300, 400, 500, 600) according to at least one of the preceding claims, **characterized in that** it has a central passage (251, 351, 451, 551, 651, 951) along its main axis (250, 350, 450, 550, 650, 950).

14. Ship's propulsion (901), consisting of a control device (902) with a swashplate mechanism (900) according to at least one of the preceding claims for the actuation of a pivotable thrust unit (903), the control device (902) having arranged in it an electric motor (965) for driving a drive member (910), rotatable about a main axis (950), by means of a spur wheel (966) and a drive toothing (913), and a transmission member (920) being arranged rotatably about a wobble axis (960) on the drive member (910), the transmission member (920) and also the output member (930) and the support member (940) having a central passage (951), in which a second drive shaft (963) is arranged rotatably about the main axis (950) for the purpose of driving the propeller shaft (983), and the output member (930) being operatively connected to a pivotable thrust unit (903) for the purpose of setting the direction of travel.

## Revendications

1. Mécanisme à roue oscillante (100, 200, 300, 400, 500, 600, 900) constitué d'un organe d'entraînement (110, 210, 310, 410, 510, 610, 910) pouvant tourner autour d'un axe principal (150, 250, 350, 450, 550, 650, 950), d'un organe de transfert (120, 220, 320, 420, 520, 620, 920) qui est disposé de manière à pouvoir tourner autour d'un axe d'oscillation (160, 260, 360, 460, 560, 660, 960), l'axe d'oscillation coupant l'axe principal suivant un angle d'oscillation (α) et tournant autour de l'axe principal avec l'organe d'entraînement, ainsi que d'un organe de sortie (130, 230, 330, 430, 530, 630, 930) et d'un organe de support (140, 240, 340, 440, 540, 640, 940), entre l'organe de transfert et l'organe de sortie étant disposé un premier moyen d'accouplement et entre l'organe de transfert et l'organe de support étant disposé un deuxième moyen d'accouplement et au moins l'un des deux moyens d'accouplement étant une paire de dentures, **caractérisé en ce que** les dentures (171, 271, 371, 471, 571, 671, 172, 272, 372, 472, 572, 672) de la paire de dentures servant de moyens d'accouplement sont réalisées sous forme de dentures droites.

2. Mécanisme à roue oscillante (100, 200, 300, 400, 500) selon la revendication 1, **caractérisé en ce que** le premier moyen d'accouplement est réalisé sous forme d'au moins une première paire de dentures, constituée d'une première denture (171, 271, 371, 471, 571) et d'une deuxième denture (172, 272, 372, 472, 572) et le deuxième moyen d'accouplement est réalisé sous forme d'au moins une deuxième paire de dentures, constituée d'une troisième denture (173, 273, 373, 473, 573) et d'une quatrième denture (174, 274, 374, 474, 574).

3. Mécanisme à roue oscillante (200, 300, 400, 500) selon la revendication 2, **caractérisé en ce qu'**entre la première denture (171, 271, 371, 471, 571) et la deuxième denture (172, 272, 372, 472, 572), et la troisième denture (173, 273, 373, 473, 573) et la quatrième denture (174, 274, 374, 474, 574) est prévue une différence de nombre de dents.

4. Mécanisme à roue oscillante (200) selon au moins l'une quelconque des revendications 1 à 3, **caractérisé en ce que** la première denture (271) et la troisième denture (273) disposées sur l'organe de transfert (220) sont réalisées sous forme de dentures extérieures et la deuxième denture (272) sur l'organe de sortie (230) ainsi que la quatrième denture (274) sur l'organe de support (240) sont réalisées à chaque fois sous forme de dentures internes.

5. Mécanisme à roue oscillante (300) selon au moins l'une quelconque des revendications 1 à 3, **caractérisé en ce que** la première denture (371) et la troisième denture (373) disposées sur l'organe de transfert (320) sont réalisées sous forme de dentures internes et la deuxième denture (372) disposée sur l'organe de sortie (330) ainsi que la quatrième denture (374) sur l'organe de support (340) sont réalisées à chaque fois sous forme de dentures externes.

6. Mécanisme à roue oscillante (400) selon au moins l'une quelconque des revendications 1 à 3, **caractérisé en ce que** la première denture (471) disposée sur l'organe de transfert (420) et la quatrième denture (474) disposée sur l'organe de support (440) sont réalisées sous forme de dentures internes et la deuxième denture (472) disposée sur l'organe de sortie (430) et la troisième denture (473) disposée sur l'organe de transfert (420) sont réalisées sous forme de dentures externes.

7. Mécanisme à roue oscillante (500) selon au moins l'une quelconque des revendications 1 à 3, **caractérisé en ce que** la première denture (571) et la troisième denture (573) disposées sur l'organe de transfert (520) sont réalisées sous forme de dentures internes et la deuxième denture (572) disposée sur l'organe de sortie (530) et la quatrième denture (574) disposée sur l'organe de support (540) sont réalisées sous forme de dentures externes, la première et la troisième denture étant disposées concentriquement avec des diamètres différents sur l'organe de transfert (520).

8. Mécanisme à roue oscillante (600) selon la revendication 1, **caractérisé en ce que** le premier moyen d'accouplement est réalisé sous forme d'au moins une première paire de dentures, constituée d'une première denture (671) et d'une deuxième denture (672), et le deuxième moyen d'accouplement est réalisé sous forme de suspension à cardan (656, 657, 658).

9. Mécanisme à roue oscillante (400, 500, 600) selon l'une quelconque des revendications 6, 7 ou 8, **caractérisé en ce que** pour la compensation des forces radiales résultant des dentures, au moins un moyen d'accouplement se compose à chaque fois de deux paires de dentures, les engagements des dents (461, 462, 463, 464, 561, 562, 563, 564, 661, 662) des dentures (471, 472, 475, 476, 473, 474, 477, 478, 571, 572, 575, 576, 573, 574, 577, 578, 671, 672, 673, 674) Formant les deux paires de dentures étant disposés de manière décalée de 180° les uns par rapport aux autres.

10. Mécanisme à roue oscillante (200, 400, 500) selon la revendication 2 et selon l'une quelconque des revendications 4, 6 ou 7, **caractérisé en ce que** l'organe d'entraînement (210, 410, 510) présente un contour extérieur (285, 485, 585) oscillant disposé centralement par rapport à un axe d'oscillation (260, 460, 560), autour duquel contour extérieur l'organe de transfert (220, 420, 520) est disposé de manière à pouvoir tourner au moyen d'un support sur palier (282, 482, 582).

11. Mécanisme à roue oscillante (300) selon la revendication 5, **caractérisé en ce que** l'organe d'entraînement (310) présente un contour intérieur (386) oscillant disposé centralement par rapport à un axe d'oscillation (360), à l'intérieur duquel l'organe de transfert (320) est disposé de manière à pouvoir tourner au moyen d'un support sur palier (382).

12. Mécanisme à roue oscillante (200, 300, 400, 500, 600) selon au moins l'une quelconque des revendications 2 à 8, **caractérisé en ce qu'**au moins une denture (271, 371, 471, 571, 671, 272, 372, 472, 572, 672, 273, 373, 473, 573, 673, 274, 374, 474, 574, 674, 475, 476, 477, 478, 575, 576, 577, 578) d'une paire de dentures est réalisée sous forme de denture droite à développante avec un développement de profil variable sur la largeur des dents.

13. Mécanisme à roue oscillante (200, 300, 400, 500, 600) selon au moins l'une quelconque des revendications précédentes, **caractérisé en ce que** celui-ci présente le long de son axe principal (250, 350, 450, 550, 650, 950) un passage central (251, 351, 451, 551, 651, 951).

14. Propulsion de navire (901) constituée d'un dispositif de commande (902) avec un mécanisme à roue oscillante (900) selon au moins l'une quelconque des revendications précédentes, pour l'actionnement d'une unité de poussée pivotante (903), un moteur électrique (965) pour l'entraînement d'un organe d'entraînement (910) pouvant tourner autour d'un axe principal (950) au moyen d'un pignon droit (966) et d'une denture d'entraînement (913) étant disposé dans le dispositif de commande (902), et un organe de transfert (920) étant disposé de manière à pouvoir tourner autour d'un axe d'oscillation (960) sur l'organe d'entraînement (910), l'organe de transfert (920) ainsi que l'organe de sortie (930) et l'organe de support (940) présentant un passage central (951) dans lequel est disposé un deuxième arbre d'entraînement (963) pouvant tourner autour de l'axe principal (950), pour l'entraînement de l'arbre d'hélice (983), et l'organe de sortie (930) étant en liaison fonctionnelle avec une unité de poussée pivotante (903) en vue de l'ajustement de la direction d'avance.
